(19) Europäisches Patentamt
European Patent Office
Office européen des brevets

(11) **EP 4 339 169 A1**

(12) **EUROPEAN PATENT APPLICATION**

(43) Date of publication:
**20.03.2024 Bulletin 2024/12**

(21) Application number: **23195501.4**

(22) Date of filing: **05.09.2023**

(51) International Patent Classification (IPC):
**C03C 3/087** (2006.01)  **C03C 3/097** (2006.01)
**C03C 4/00** (2006.01)  **C03C 10/00** (2006.01)
**C03C 14/00** (2006.01)

(52) Cooperative Patent Classification (CPC):
**C03C 3/087; C03C 3/097; C03C 4/0071; C03C 4/0085; C03C 10/0027; C03C 14/006; C03C 2214/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 DE 102022123616**

(71) Applicant: SCHOTT AG
**55122 Mainz (DE)**

(72) Inventors:
• MITRA, Ina
**55122 Mainz (DE)**
• LAUER, Sonja
**55122 Mainz (DE)**
• KUNISCH, Clemens
**55122 Mainz (DE)**
• GROSS, Christoph
**55122 Mainz (DE)**

(74) Representative: **Schott Corporate IP**
**Hattenbergstraße 10**
**55122 Mainz (DE)**

(54) **GLASS-CERAMIC HAVING SPECIFIC THERMAL EXPANSION CHARACTERISTICS**

(57) The present invention relates to a glass-ceramic having improved thermal expansion characteristics and to the use thereof in a precision component.

Fig. 10

EP 4 339 169 A1

**Description**

The present invention relates to a glass-ceramic having specific thermal expansion characteristics and simultaneously good meltability, shaping and ceramizability, and to the use of the glass-ceramic of the invention in a precision component, more particularly in a precision component in lithography, especially in EUV lithography.

Background of the invention

Materials and precision components having low thermal expansion or low CTE (coefficient of thermal expansion) are already known in the prior art.

Known materials for precision components having low thermal expansion in the temperature range around room temperature are ceramics, Ti-doped quartz glass and glass-ceramics. Glass-ceramics having low thermal expansion are, in particular, lithium aluminium silicate glass-ceramics (LAS glass-ceramics), which are described, for example, in US 4,851,372, US 5,591,682, EP 587979 A, US 7,226,881, US 7,645,714, DE 102004008824 A and DE 102018111144 A. Further materials for precision components are cordierite ceramics or cordierite glass-ceramics.

Such materials are frequently used for precision components that have to meet particularly exacting requirements in terms of their properties (e.g. mechanical, physical, optical properties). They are employed in particular in terrestrial and space-based astronomy and Earth observation, LCD lithography, microlithography and EUV lithography, metrology, spectroscopy and measurement technology. In this context it is necessary for the components, according to specific application, to have in particular an extremely low thermal expansion.

In general, the thermal expansion of a material is determined by a static method in which the length of a test specimen is determined at the start and at the end of the specific temperature interval, and the difference in length is used to calculate the average coefficient of expansion $\alpha$ or CTE (coefficient of thermal expansion). The CTE is then reported as the average for this temperature interval - for example, for the temperature interval from 0°C to 50°C, as CTE(0;50) or $\alpha$(0;50).

In order to satisfy the constantly rising requirements, materials have been developed that have a CTE better matched to the field of use of a component formed from the material. For example, the average CTE can be optimized not only for the standard temperature interval CTE(0;50) but also, for example, for a temperature interval around the actual application temperature, for example the interval from 19°C to 25°C, i.e. CTE(19;25), for particular lithography applications. As well as the determination of the average CTE, it is possible to determine the thermal expansion of a test specimen in very small temperature intervals as well and hence to represent it as a CTE-T curve. A CTE-T curve of this kind may preferably have a zero crossing at one or more temperatures, preferably at or close to the planned application temperature. At a zero crossing of the CTE-T curve, the relative change in length with change in temperature is particularly small. For certain glass-ceramics, such a zero crossing of the CTE-T curve may be shifted to the application temperature of the component by suitable temperature treatment. As well as the absolute CTE value, the slope of the CTE-T curve should also be at a minimum around the application temperature in order to bring about a minimum change in length of the component in the event of slight temperature changes. The above-described optimizations of the CTE or of the thermal expansion take place, in the case of these specific zero-expansion glass-ceramics, generally for constant composition by variation of the ceramization conditions.

An adverse effect in the case of the known precision components and materials, especially in the case of the glass-ceramics such as LAS glass-ceramics, is "thermal hysteresis", called "hysteresis" hereinafter for short. Hysteresis here means that the change in length of a test specimen on heating at constant heating rate differs from the change in length of the test specimen on subsequent cooling at constant cooling rate, even if the magnitude of cooling rate and heating rate is the same. If the change in length is presented as a graph as a function of the temperature for heating or cooling, a classic hysteresis loop is the result. The extent of the hysteresis loop depends here also on the rate of the temperature change. The faster the change in temperature, the more marked the hysteresis effect. The hysteresis effect makes it clear that the thermal expansion of an LAS glass-ceramic is dependent on the temperature and on the time, i.e., for example, on the rate of temperature change, and this has also already been described occasionally in the specialist literature, e.g. O. Lindig and W. Pannhorst, "Thermal expansion and length stability of ZERODUR® in dependence on temperature and time", APPLIED OPTICS, Vol. 24, No. 20, Oct. 1985; R. Haug et al., "Length variation in ZERODUR® M in the temperature range from -60°C to +100°C", APPLIED OPTICS, Vol. 28, No.19, Oct. 1989; R. Jedamzik et al., "Modeling of the thermal expansion behavior of ZERODUR® at arbitrary temperature profiles", Proc. SPIE Vol. 7739, 2010; D.B. Hall, "Dimensional stability tests over time and temperature for several low-expansion glass ceramics", APPLIED OPTICS, Vol. 35, No. 10, April 1996.

Since the change in length of a glass-ceramic exhibiting thermal hysteresis is delayed or advanced with respect to the change in temperature, the material or a precision component manufactured therefrom exhibits a disruptive isothermal change in length, meaning that, after a change in temperature, a change in length of the material occurs even at the time when the temperature is already being held constant (so-called "isothermal hold"), specifically until a stable state is attained. If the material is subsequently again heated and cooled, the same effect occurs again.

With the LAS glass-ceramics known to date, in spite of variation of the ceramization conditions with consistent composition, it has not been possible to date to eliminate the thermal hysteresis effect without adversely affecting other properties.

In relation to the properties of materials, especially glass-ceramics, for use in precision components, a relevant temperature range is frequently from 0°C to 50°C, especially from 10°C to 35°C or from 19°C to 25°C, with a temperature of 22°C being generally referred to as room temperature. Glass-ceramics are employed, for example, for precision components in lithography, especially in EUV lithography.

EUV lithography (also called EUVL hereinafter) is a photolithography process which utilizes electromagnetic radiation between typically 5 nm and 50 nm (soft x-rays), especially electromagnetic radiation having a wavelength of 13.5 nm (91.82 eV). This radiation is referred to as "extreme ultraviolet radiation" (EUV). This range of the electromagnetic spectrum is absorbed completely by virtuely all materials. Consequently, in contrast to DUV lithography (Deep ultraviolet, for example 248 nm and/or 193 nm), it is not possible to use optically transparent photomasks (also referred to hereinafter as reticles, reticle masks or masks), it being necessary instead to use reflective multi-layer stack systems on a photomask substrate with low thermal expansion (also referred to below as reticle substrate, mask substrate, reticle mask blank, photomask blank or mask blank or substrate) as photomasks. A disadvantage of using reflective photomasks, however, is the comparatively poor maximum reflectivity of the multi-layer stack in the EUV radiation range, of typically less than 70%. The radiation which the photomask does not reflect is absorbed thereby and transmitted in the form of heat to the photomask substrate and also, possibly, to the photomask carrier (also referred to below as reticle carrier or reticle stage or mask carrier or mask stage or photomask stage), thereby possibly increasing the temperature of these components, especially as the irradiation time increases.

Even slight thermally induced deformations of the photomask, however, can lead to imaging errors on the illuminated wafer and hence to yield losses during chip production. To prevent the described local deformations and distortions in the photomask substrate, it is therefore necessary, for photomask substrates, to use materials with low thermal expansion or a low CTE (coefficient of thermal expansion).

This is all the more important given that the average power of the EUV beam sources used in EUV lithography will increase in future in order to boost the throughput, for example via higher repetition rates and/or higher individual pulse energies, and, consequently, the thermal load on the photomask and possibly also on the photomask carrier will increase. As a result, active cooling concepts for the photomask and for the photomask carrier will become increasingly significant, possibly leading to further temperature changes especially in the photomask and the photomask carrier. In this context, it must also be borne in mind that the thermal load on the photomasks and/or on the photomask carrier is not constant, but instead fluctuates as a result of various factors. These factors include temporally nonuniform illumination times, resulting, for example, from the loading of the photomask carrier with a new photomask or from downtimes due to faltering operations. The stated thermally induced deformations can be compensated partly through compensation mechanisms within the overall optical system of a lithography unit, in the beam shaping of the illumination, for example; this compensation, however, is limited, and hence it is advantageous to minimize the individual contributions to (imaging) errors. Account must be taken here not only of thermally induced deformation of the material during illumination, but also of the thermal characteristics over time (thermal hysteresis). Materials having a comparatively high thermal hysteresis, however, make the aforesaid compensation more difficult and hence also make it more difficult to prevent unwanted thermal imaging errors by the photomask.

Further EUVL precision components with exacting requirements in terms of their thermal properties are, in particular, also EUVL mirrors in the optical system of the EUVL device, and wafer carriers (also referred to below as wafer stages), on which the (Si) wafers for exposure are placed.

Given that many applications of precision components, particularly applications in EUV lithography, take place in the temperature range from greater than 0°C up to about room temperature, materials with thermal hysteresis effects and isothermal change in length are disadvantageous, given the possibility of optical disturbances in the case, for example, of optical components such as photomask substrates, photomask carriers, lithography mirrors, and astronomical or space-based mirrors. In the case of other precision components made from glass-ceramic that are employed in measurement technology (e.g. precision rules, reference plates in interferometers), measurement inaccuracies may arise as a result.

Many known materials such as ceramics, Ti-doped quartz glass and particular glass-ceramics feature an average coefficient of thermal expansion CTE (0;50) of $0 \pm 0.1 \times 10^{-6}$/K (corresponding to $0 \pm 0.1$ ppm/K). Materials having a low average CTE of this kind within the stated temperature range are referred to as zero-expansion materials in the context of this invention. However, glass-ceramics, especially LAS glass-ceramics, whose average CTE is optimized in this way generally have a thermal hysteresis in the temperature range of 15°C to 35°C. In other words, specifically in applications around room temperature (i.e. 22°C), a disruptive hysteresis effect occurs with these materials, and impairs the accuracy of precision components produced using such a material. Therefore, a glass-ceramic material was developed (see US 4,851,372) that has no significant hysteresis at room temperature, although the effect is not eliminated but has merely been shifted to lower temperatures, so that this glass-ceramic at temperatures of 15°C and below shows a distinct hysteresis that may likewise still be disruptive. To characterize the thermal hysteresis of a material in a particular temperature range, therefore, the thermal characteristics of the materials in the context of this invention are considered for different temperature points in this range. There are even glass-ceramics that show no significant hysteresis at 22°C and at 5°C, but these glass-ceramics have an average CTE (0;50) of > 0 $\pm$ 0.1 ppm/K, and so are not zero-expansion glass-ceramics in the sense of the definition stated above.

A further requirement imposed on a glass-ceramic material is good meltability of the glass components and also simple melt guiding and homogenization of the underlying glass melt in industrial-scale production plants, in order - following ceramization of the glass - to meet the exacting requirements of the glass-ceramic with regard to CTE homogeneity, internal quality - in particular, a low number of inclusions (especially bubbles), low level of stria - and polishability, etc.

It was therefore an object of the invention to provide a glass-ceramic having improved expansion characteristics. A further object was to provide an industrially producible glass-ceramic that has zero expansion and a reduced thermal hysteresis especially in the temperature range of 15°C to 35°C, and to provide a precision component produced from this material. A further object was to provide a material which in the case of a precision component manufactured therefrom, especially a precision component in EUV lithography, enables a relatively high imaging accuracy.

The object above is achieved by the subjects of the claims. The present invention has various aspects:
According to one aspect of the invention, an LAS glass-ceramic is provided, having an average coefficient of thermal expansion CTE in the range from 0 to 50°C of at most 0 $\pm$ 0.1 $\times$ 10$^{-6}$/K and a thermal hysteresis at least in the temperature range of 15-35°C of < 0.1 ppm and comprising the following components (in mol% based on oxide):

| | |
|---|---|
| $SiO_2$ | 60 - < 70 |
| $Li_2O$ | 7 - 9.6 |
| $MgO+ZnO$ | > 0.5 - 1.5 |
| $R_2O$ | > 0.5 |

where $R_2O$ may be $Na_2O$ and/or $K_2O$ and/or $Cs_2O$ and/or $Rb_2O$,
nucleating agent with a content of 1.5 to 6 mol%, where nucleating agent is at least one component selected from the group consisting of $TiO_2$, $ZrO_2$, $Ta_2O_5$, $Nb_2O_5$, $SnO_2$, $MoO_3$, $WO_3$, $HfO_2$.

According to a further aspect, the invention pertains to the use of a glass-ceramic of the invention as a substrate for a precision component, more particularly a precision EUV lithography component.

According to a further aspect, the invention pertains to the use of an LAS glass-ceramic of the invention in a precision component more particularly for use in metrology, spectroscopy, measurement technology, lithography, astronomy or Earth observation from space, for example as mirror or mirror carrier for segmented or monolithic astronomical telescopes or else as weight-reduced or ultra-light mirror substrates for, for example, space-based telescopes or as high-precision structure components for measurement of distance, for example in space, or optics for Earth observation, as precision components, such as standards for precision measurement technology, precision rules, reference plates in interferometers, as mechanical precision parts, for example for ring laser gyroscopes, spiral springs for the clock industry, as for example mirrors and prisms in LCD lithography, for example as mask holders, wafer stages, reference plates, reference frames and grid plates in microlithography and in EUV (extreme UV) microlithography, where a reflective optical system is employed, and, furthermore, as mirrors and/or photomask substrates or reticle mask blanks or photomask carriers in EUV microlithography.

According to another aspect, the invention pertains to a precision component which comprises an LAS glass-ceramic of the invention.

The figures show:

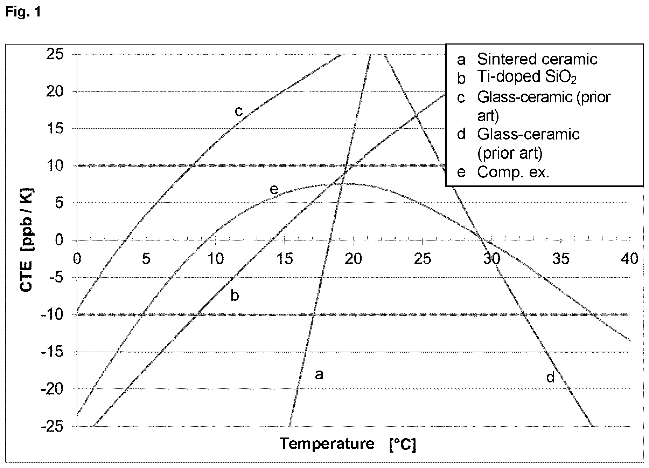

Figure 1 shows CTE-T curves of materials known from the prior art that have low thermal lengthwise expansion, for precision components, for example.

Figure 2 shows the hysteresis characteristics of three glass-ceramic samples, ascertained by the same method also used in the present invention. This diagram originates from R. Jedamzik et al., "Modeling of the thermal expansion behavior of ZERODUR® at arbitrary temperature profiles", Proc. SPIE Vol. 7739, 2010.

Figures 3 to 8 show hysteresis curves of known and non-inventive glass-ceramic materials which can be used for producing known precision component and which have a thermal hysteresis at least in the temperature range of 15

- 35°C of > 0.1 ppm (dashed = cooling curve, dotted = heating curve).

Figure 9 shows the hysteresis curve (dashed = cooling curve, dotted = heating curve) of a prior-art glass-ceramic which can be used for producing a precision component and which has a thermal hysteresis at least in the temperature range of 15 - 35°C of < 0.1 ppm, but the steep curve profile shows that the glass-ceramic does not have zero expansion.

Figures 10 and 11 show hysteresis curves of glass-ceramics of the invention (compositions as for Ex. 2 and 4 in table 1) which can be used for producing a precision component of the invention and which have a thermal hysteresis at least in the temperature range of 15 - 35°C of < 0.1 ppm (dashed = cooling curve, dotted = heating curve).

Figure 12 shows a normalized $\Delta I/I_0$-T curve (also called dl/lo curve) of a glass-ceramic of the invention (compositions as for Ex. 2 in table 1) and reference lines for ascertaining the index F as a measure of the flatness of the expansion curve in the temperature range from 0°C to 50°C.

Figures 13 to 16 show normalized $\Delta I/I_0$-T curves of known materials which can be used for producing known precision component, and reference lines for ascertaining the index F as a measure of the flatness of the expansion curve in the temperature ranges from -20°C or -10°C to 70°C or 80°C.

Figure 17 shows normalized $\Delta I/I_0$-T curves of known materials in the temperature range from -30°C to +70°C.

Figure 18 shows that the CTE-T curve of the glass-ceramic of Figure 12, which can be used for producing an advantageous precision component, advantageously has a CTE "plateau".

Figure 19 shows the slope of the CTE-T curve from Figure 18.

Figure 20 shows a normalized $\Delta I/I_0$-T curve of a glass-ceramic of the invention (composition as for Ex. 2 in table 1) and reference lines for ascertaining the alternative index $f_{(20;40)}$ as a measure of the flatness of the expansion curve in the temperature range from 20°C to 40°C.

Figure 21 shows a normalized $\Delta I/I_0$-T curve of a glass-ceramic of the invention (composition as for Ex. 2 in table 1) and reference lines for ascertaining the alternative index $f_{(20;70)}$ as a measure of the flatness of the expansion curve in the temperature range from 20°C to 70°C.

Figure 22 shows a normalized $\Delta I/I_0$-T curve of a glass-ceramic of the invention (composition as for Ex. 4 in table 1) and reference lines for ascertaining the alternative index $f_{(-10;30)}$ as a measure of the flatness of the expansion curve in the temperature range from -10°C to 30°C.

A subject of the invention is an LAS glass-ceramic having an average coefficient of thermal expansion CTE in the range from 0 to 50°C of at most $0 \pm 0.1 \times 10^{-6}$/K and a thermal hysteresis at least in the temperature range of 15°C - 35°C of < 0.1 ppm and comprising the following components (in mol% based on oxide):

| | |
|---|---|
| $SiO_2$ | 60 - < 70 |
| $Li_2O$ | 7 - 9.6 |
| MgO+ZnO | > 0.5 - 1.5 |
| $R_2O$ | > 0.5 |

where $R_2O$ may be $Na_2O$ and/or $K_2O$ and/or $Cs_2O$ and/or $Rb_2O$,
nucleating agent with a content of 1.5 to 6 mol%, where nucleating agent is at least one component selected from the group consisting of $TiO_2$, $ZrO_2$, $Ta_2O_5$, $Nb_2O_5$, $SnO_2$, $MoOs$, $WO_3$, $HfO_2$.

The invention provides an LAS glass-ceramic (also called glass-ceramic below) that combines a number of relevant properties: it can be produced with high homogeneity in industrial-scale production plants. Additionally, it has an average coefficient of thermal expansion CTE in the range from 0 to 50°C of at most $0 \pm 0.1 \times 10^{-6}$/K, i.e. it has zero expansion. Moreover, it has a thermal hysteresis of < 0.1 ppm at least in the temperature range from 15°C to 35°C. A material having such a low hysteresis effect of < 0.1 ppm within the stated temperature range is referred to hereinafter as "hysteresis-free". Since the extent of the hysteresis, as already mentioned above, is dependent on the rate of temperature change used to ascertain it, the statements relating to hysteresis in the context of the invention refer to a heating rate/cooling rate of 36 K/h, i.e. 0.6 K/min. The low thermal hysteresis in the stated temperature range reduces the cost and effort for compensating thermally induced deformations of a precision component over time when the material is used in a precision component, especially in an EUV lithography component. In advantageous configurations, the LAS glass-ceramic may at least in the temperature range of 15°C to 40°C, advantageously at least in the temperature range of 15°C to 45°C, preferably at least in the temperature range from 15°C to 50°C or at least in the temperature range from 10°C to 35°C, be hysteresis-free.

The features of CTE and thermal hysteresis are described in detail later on below.

A glass-ceramic in accordance with the invention comprehends non-porous inorganic materials having a crystalline phase and a vitreous phase, with the matrix, i.e. the continuous phase, generally being a glass phase. For production of the glass-ceramic, first of all, the components of the glass-ceramic are mixed, melted and refined, and what is called a green glass is cast. The green glass, after cooling, is crystallized in a controlled manner by reheating (so-called "controlled volume crystallization"). The chemical composition (analysis) of the green glass and of the glass-ceramic produced from it are the same; ceramization alters solely the internal structure of the material. Therefore, where reference is made hereinafter to the composition of the glass-ceramic, the statements made are equally applicable to the precursor article of the glass-ceramic, i.e. to the green glass.

In the prior art, it was assumed to date that the glass components MgO and ZnO in combination or each individually are necessary, specifically for zero-expansion LAS glass-ceramics, in order to achieve the zero expansion and to make the shape of the CTE-T curve of the material "flat", i.e. with a shallow slope of the CTE-T curve within the relevant temperature range. In DE 10 2022 105 929.4, unpublished at the priority date of the present application, the inventor recognized for the first time that the two components MgO and ZnO promote the occurrence of thermal hysteresis within the temperature range under consideration and that therefore it is essential to the provision of a zero-expansion LAS glass-ceramic which is hysteresis-free at least in the temperature range of 10°C to 35°C to limit the MgO and ZnO content or even to omit them entirely. Consequently, there was a conflict of objectives in that an LAS glass-ceramic could be either zero-expansion or hysteresis-free.

This conflict of objectives was resolved, with the technical teaching of DE 10 2022 105 929.4, unpublished at the priority date of the present application, by not only doing largely without the use of MgO and ZnO but also selecting the $SiO_2$ and $Li_2O$ contents from stipulated ranges as well.

A problem affecting these zero-expansion and hysteresis-free glass-ceramics, however, can be the establishment of the profile for the expansion curve and hence for the CTE. The expansion curves for the glass-ceramics with a low sum total of MgO + ZnO in some cases, rather than being flat as desired, are sharply curved specifically within the temperature range between 0°C and 50°C. The inventors have discovered that through a deliberate addition of more than 0.5 mol% of alkali metal oxides ($R_2O$), selected from the group consisting of $Na_2O$ and/or $K_2O$ and/or $Cs_2O$ and/or $Rb_2O$, glass-ceramics with a flat expansion curve are obtained, surprisingly, and hence also the total MgO + ZnO content, as claimed in the context of the present invention, can be higher with addition of more than 0.5 mol% of $R_2O$, with the resulting glass-ceramics nevertheless being hysteresis-free at least in the temperature range from 15°C to 35°C - that is, in a temperature interval which includes room temperature.

LAS glass-ceramics contain a negatively expanding crystal phase which, in accordance with the invention, advantageously comprises or consists of high quartz solid solution, also called ß-eucryptite, and a positively expanding glass phase. As well as $SiO_2$ and $Al_2O_3$, $Li_2O$ is a main constituent of the solid solution. If present, ZnO and/or MgO are likewise incorporated into the solid solution phase, and together with $Li_2O$ influence the expansion characteristics of the crystal phase. In contrast to the known zero-expansion glass-ceramics in which MgO and ZnO in particular are used for establishing the desired expansion characteristics of the glass-ceramic, the invention for this purpose uses $R_2O$, where $R_2O$ may be $Na_2O$ and/or $K_2O$ and/or $Rb_2O$ and/or $Cs_2O$. Unlike MgO and ZnO, however, the stated alkali metal oxides remain in the glass phase and are not incorporated into the high quartz solid solution.

In the context of the invention, it has been found that for the provision of a zero-expansion and hysteresis-free glass-ceramic, it may be advantageous if the composition meets the condition of molar content of $SiO_2$ + (5 × molar content of $Li_2O$) ≥ 105, advantageously ≥ 105.5, advantageously ≥ 106 or preferably ≥ 106.5, preferentially molar content of $SiO_2$ + (5 × molar content of $Li_2O$) ≥ 107 or ≥ 107.5. Alternatively or additionally, for the condition of "molar content $SiO_2$ + (5 × molar content of $Li_2O$)", an advantageous upper limit of ≤ 115.5 or of ≤ 114.5 or of ≤ 113.5 may apply.

In one advantageous development, the glass-ceramic may comprise the following components, individually or in any combination, in mol%:

| | |
|---|---|
| $Al_2O_3$ | 10 to 22 |
| $P_2O_5$ | 0 to 6 |
| MgO | 0 to 1.1 |
| ZnO | 0 to 1.5 |

(continued)

| | |
|---|---|
| R$_2$O | > 0.5 to 6 |
| RO | 0 to 6 |
| TiO$_2$+ZrO$_2$ | 1.5 to 6 |

With further preference, within the scope of the limits stated above for the sum totals of R$_2$O, RO and TiO$_2$+ZrO$_2$, the glass-ceramic may contain the following components, individually or in any combination, in mol%:

| | |
|---|---|
| Na$_2$O | 0 to 3 |
| K$_2$O | 0 to 3 |
| Cs$_2$O | 0 to 2 |
| Rb$_2$O | 0 to 2 |
| CaO | 0 to 5 |
| BaO | 0 to 4 |
| SrO | 0 to 3 |
| TiO$_2$ | 0 to 5 |
| ZrO$_2$ | 0 to 3 |

In one advantageous embodiment, the LAS glass-ceramic comprises (in mol% based on oxide):

| | |
|---|---|
| Al$_2$O$_3$ | 10 to 22 |
| P$_2$O$_5$ | 0 to 6 |
| MgO | 0 to 1.0 |
| ZnO | 0 to 1.4 |
| R$_2$O | 0.6 to 5 |
| RO | 0 to 6 |
| Nucleating agent | 1.5 to 6, |

where nucleating agent is preferably TiO$_2$ and/or ZrO$_2$.

In another advantageous embodiment, the LAS glass-ceramic comprises (in mol% based on oxide):

| | |
|---|---|
| SiO$_2$ | 60.50 to 69 |
| Li$_2$O | 8 to 9.6 |
| Al$_2$O$_3$ | 11 to 21 |
| P$_2$O$_5$ | 0 to 4 |
| MgO | 0 to 1.1 |
| ZnO | 0 to 1.5 |
| R$_2$O | > 0.5 to 4 |
| RO | 0.2 to 4.5 |
| Nucleating agent | 2.5 to 5, |

where nucleating agent is preferably TiO$_2$ and/or ZrO$_2$.

The glass-ceramic contains a fraction of silicon dioxide (SiO$_2$) of at least 60 mol%, more preferably at least 60.5 mol%, also preferably at least 61 mol%, also preferably at least 61.5 mol%, further preferably at least 62.0 mol%. The fraction of SiO$_2$ is less than 70 mol%, more preferably at most 69.5 mol%, further preferably at most 69 mol%, also preferably at most 68.5 mol%. With larger fractions of SiO$_2$, the batch is more difficult to melt, and the viscosity of the melt is higher, which can lead to problems affecting the homogenization of the melts in industrial-scale production plants. The SiO$_2$ content ought therefore to be less than 70 mol%. If the viscosity of a melt is high, there is an increase in the processing temperature Va of the melt. Refining and homogenization of the melt require very high temperatures, which, however, mean that the increasing aggressiveness of the melt with temperature results in attacks on the linings of the melting assemblies. Moreover, even higher temperatures may not be enough to generate a homogeneous melt, with the consequence that the green glass may have stria and inclusions (especially bubbles and particles originating from the lining of the melting assemblies), so that, after ceramization, the glass-ceramic that is produced fails to meet the requirements in terms of homogeneity of properties, such as the homogeneity of the coefficient of thermal expansion, for example. $SiO_2$ contents lower than the stated upper limit may be preferable for this reason.

The fraction of $Al_2O_3$ is advantageously at least 10 mol%, preferentially at least 11 mol%, preferably at least 12 mol%, more preferably at least 13 mol%, also preferably at least 14 mol%, also preferably at least 14.5 mol%, further preferably at least 15 mol%. If the content is too low, formation of low-expansion solid solution is inadequate or absent. The fraction of $Al_2O_3$ is advantageously at most 22 mol%, preferentially at most 21 mol%, preferably at most 20 mol%, additionally preferably at most 19.0 mol%, more preferably at most 18.5 mol%. Too high an $Al_2O_3$ content leads to increased viscosity and promotes uncontrolled devitrification of the material.

The glass-ceramic of the invention may contain 0 to 6 mol% of $P_2O_5$. The $P_2O_5$ phosphate content of the glass-ceramic may advantageously be at least 0.1 mol%, preferentially at least 0.3 mol%, preferably at least 0.5 mol%, also preferably at least 0.6 mol%, more preferably at least 0.7 mol%, further preferably at least 0.8 mol%. $P_2O_5$ is incorporated substantially into the crystal phase of the glass-ceramic and has positive influence on the expansion characteristics of the crystal phase and hence of the glass-ceramic. Moreover, melting of the components and refining characteristics of the melt are improved. If, however, too much $P_2O_5$ is present, the profile of the CTE-T curve in the 0°C to 50°C temperature range does not exhibit an advantageous flat progression. Advantageously, therefore, there ought to be not more than 6 mol%, preferentially not more than 5 mol%, more preferably at most 4 mol%, further preferably less than 4 mol% of $P_2O_5$ present in the glass-ceramic. According to individual embodiments, the glass-ceramics may be free of $P_2O_5$.

In the context of the invention, certain sum totals and proportions of the components $SiO_2$, $Al_2O_3$ and/or $P_2O_5$, i.e. of the components which form the high quartz solid solution, may be conducive to the formation of a glass-ceramic of the invention.

The cumulative fraction in mol% of the $SiO_2$ and $Al_2O_3$ base constituents of the LAS glass-ceramic is advantageously at least 75 mol%, preferentially at least 78 mol%, preferably at least 79 mol%, more preferably at least 80 mol% and/or preferentially at most 90 mol%, preferentially at most 87 mol%, preferably at most 86 mol%, more preferably at most 85 mol%. If this sum total is too high, the viscosity curve of the melt is shifted to higher temperatures, which is disadvantageous, as already elucidated above in connection with the $SiO_2$ component. If the sum total is too low, too little solid solution is formed.

The cumulative fraction in mol% of the $SiO_2$, $Al_2O_3$ and $P_2O_5$ base constituents of the LAS glass-ceramic is preferentially at least 77 mol%, advantageously at least 81 mol%, advantageously at least 83 mol%, more preferably at least 84 mol% and/or preferentially at most 91 mol%, advantageously at most 89 mol%, more preferably at most 87 mol%, in one variant at most 86 mol%.

The ratio of the mol% fractions of $P_2O_5$ to $SiO_2$ is preferentially at least 0.005, advantageously at least 0.01, preferably at least 0.012 and/or preferentially at most 0.1, more preferably at most 0.08, in one variant at most 0.07.

As a further constituent, the glass-ceramic contains lithium oxide (LizO) in a fraction of at least 7 mol%, advantageously at least 7.5 mol%, preferentially at least 8 mol%, particularly preferably at least 8.25 mol%. The fraction of $Li_2O$ is limited to at most 9.6 mol%, preferentially at most 9.5 mol%, preferably at most 9.4 mol%, more preferably at most 9.35 mol%, additionally preferably at most or less than 9.3 mol%. $Li_2O$ is a constituent of the solid solution phase and makes a substantial contribution to the thermal expansion of the glass-ceramic. The stated upper limit of 9.6 mol% ought not to be exceeded, since otherwise, in spite of the total MgO + ZnO content according to the invention, the resulting glass-ceramics have a negative coefficient of thermal expansion CTE (0;50). If the $Li_2O$ content is less than 7 mol%, too little solid solution is formed and the CTE of the glass-ceramic remains positive.

The glass-ceramic of the invention contains more than 0.5 mol% of alkali metal oxide $R_2O$, where $R_2O$ may be $Na_2O$ and/or $K_2O$ and/or $Cs_2O$ and/or $Rb_2O$. In accordance with the invention, surprisingly, an $R_2O$ content of more than 0.5 mol% contributes to producing a glass-ceramic having a flat profile of the expansion curve, even with a relatively high sum total of MgO + ZnO. The sum total $R_2O$ for the $Na_2O$, $K_2O$, $Cs_2O$ and $Rb_2O$ contents may advantageously be at least 0.55 mol%, preferentially at least 0.6 mol%, advantageously at least 0.65 mol%, advantageously at least 0.7 mol%, preferably at least 0.75 mol%. Certain variants may contain at least 0.8 mol%, advantageously at least 0.85 mol%, preferably at least 0.9 mol%, preferably at least 0.95 mol%, preferably at least 1.0 mol% of $R_2O$. The sum total $R_2O$ for the $Na_2O$, $K_2O$, $Cs_2O$ and $Rb_2O$ contents may advantageously be at most 6 mol%, preferentially at most 5 mol%, preferably at most 4 mol%, preferably at most 3 mol%, preferably at most 2.5 mol%. If the sum total of $Na_2O+K_2O+Cs_2O+Rb_2O$ is too low or too high, it can be possible that the CTE (0;50) targeted by the invention is not achieved. Too much $R_2O$ in the glass-ceramic, however, impairs the chemical resistance of the material. If the sum total of $Na_2O+K_2O+Cs_2O+Rb_2O$ is too low, the expansion curve for the material exhibits a curved portion in the temperature range under consideration, and the glass-ceramic with a total MgO + ZnO content in accordance with the invention is not hysteresis-free in the sense of the invention.

Within the limits stated above for the sum total of $R_2O$, the individual components sodium oxide ($Na_2O$), po-

tassium oxide ($K_2O$), caesium oxide ($Cs_2O$) and rubidium oxide ($Rb_2O$) are present optionally in the glass-ceramic, meaning that $Na_2O$-free and/or $K_2O$-free and/or $Cs_2O$-free and/or $Rb_2O$-free variants are possible. The fraction of $Na_2O$ may advantageously be at most 3 mol%, preferably at most 2 mol%, preferentially at most 1.7 mol%, preferably at most 1.5 mol%, preferably at most 1.3 mol%, preferably at most 1.1 mol%. The fraction of $K_2O$ may advantageously be at most 3 mol%, preferentially at most 2.5 mol%, preferably at most 2 mol%, preferably at most 1.8 mol%, preferably at most 1.7 mol%. The fraction of $Cs_2O$ may advantageously be at most 2 mol%, preferentially at most 1.5 mol%, preferably at most 1 mol%, preferably at most 0.6 mol%. The fraction of $Rb_2O$ may advantageously be at most 2 mol%, preferentially at most 1.5 mol%, preferably at most 1 mol%, preferably at most 0.6 mol%. According to individual embodiments, the glass-ceramics are free of $Na_2O$ and/or $K_2O$ and/or $Cs_2O$ and/or $Rb_2O$.

$Na_2O$ and $K_2O$, in each case and independently of one another, may be present in a fraction of at least 0.05 mol%, advantageously at least 0.1 mol%, advantageously at least 0.15 mol%, preferentially at least 0.2 mol%, preferably at least 0.25 mol%, preferably at least 0.3 mol%, preferably at least 0.35 mol%, preferably at least 0.4 mol%, more preferably at least 0.45 mol%, more preferably at least 0.5 mol%, in the glass-ceramic. The stated limits may also apply for $Cs_2O$ and $Rb_2O$. The $Na_2O$, $K_2O$, $Cs_2O$ and $Rb_2O$ components remain substantially in the amorphous glass phase of the glass-ceramic and may be important for preserving the zero expansion of the ceramized material.

The glass-ceramic may contain at least one alkaline earth metal oxide selected from the group consisting of CaO, BaO and SrO, with this group being referred to collectively as "RO". The components from the RO group remain essentially in the amorphous glass phase of the glass-ceramic and may be important for preserving the zero expansion of the ceramized material. If the sum total of CaO+BaO+SrO is too high, the target CTE (0;50) of the invention is not achieved. Therefore, the fraction of RO is advantageously at most 6 mol% or at most 5.5 mol%, preferentially at most 5 mol%, advantageously at most 4.5 mol%, preferentially at most 4 mol%, preferably at most 3.8 mol%, further preferably at most 3.5 mol%, also preferably at most 3.2 mol%. If the glass-ceramic contains RO, an advantageous lower limit may be at least 0.1 mol%, advantageously at least 0.2 mol%, preferably at least 0.3 mol%, also preferably at least 0.4 mol%. According to individual embodiments, the glass-ceramics may be free of RO.

The fraction of CaO may preferentially be at most 5 mol%, advantageously at most 4 mol%, advantageously at most 3.5 mol%, advantageously at most 3 mol%, further preferably at most 2.8 mol%, more preferably at most 2.6 mol%. The glass-ceramic may advantageously contain at least 0.1 mol%, advantageously at least 0.2 mol%, preferentially at least 0.4 mol%, preferably at least 0.5 mol% of CaO. The glass-ceramic may advantageously contain the component BaO, which is a good glass-former, in a fraction of at least 0.1 mol%, preferentially at least 0.2 mol% and/or at most 4 mol%, advantageously at most 3 mol%, advantageously at most 2.5 mol%, preferentially at most 2 mol%, preferably at most 1.5 mol%, also preferably at most 1.4 mol%. The glass-ceramic may contain SrO in a fraction of at most 3 mol%, advantageously at most 2 mol%, preferentially at most 1.5 mol%, preferably at most 1.3 mol%, preferably at most 1.1 mol%, more preferably at most 1 mol%, also preferably at most 0.9 mol% and/or preferentially at least 0.1 mol%. According to individual embodiments, the glass-ceramics are free from CaO and/or BaO and/or SrO. According to one advantageous variant, the glass-ceramic contains CaO.

The glass-ceramic of the invention has a sum total of MgO + ZnO in the range of > 0.5 to 1.5 mol%. An advantageous lower limit for the sum total may be at least 0.55 mol%, advantageously at least 0.6 mol%, advantageously at least 0.65 mol%, advantageously at least 0.7 mol%, advantageously at least 0.75 mol%. At maximum, the glass-ceramic contains 1.5 mol% of MgO + ZnO. An advantageous upper limit may be less than 1.5 mol%, preferentially not more than 1.45 mol%, preferably not more than 1.4 mol%, preferably not more than 1.35 mol%, preferably not more than 1.3 mol%, preferably not more than 1.25 mol%, preferably not more than 1.2 mol%, preferably not more than 1.15 mol%, preferably not more than 1.1 mol%, preferably not more than 1.05 mol%, preferably not more than 1.0 mol%, preferably not more than 0.95 mol%. If the sum total of MgO + ZnO is too high, the glass-ceramics have a thermal hysteresis of > 0.1 ppm in the temperature range of 15°C to 35°C.

The glass-ceramic may contain magnesium oxide (MgO) with a content of 0 to 1.1 mol%. An advantageous MgO upper limit may be 1.1 mol%. If the MgO content is too high, the material exhibits a thermal hysteresis of 0.1 ppm or more in the claimed temperature range. A further advantageous upper limit may be not more than 1.05 mol%, not more than 1.0 mol%, not more than 0.95 mol%, not more than 0.9 mol%, not more than 0.85 mol% or not more than 0.8 mol%. The addition of MgO may be useful for keeping the CTE low, especially in the case of relatively high $Li_2O$ contents, for providing a zero-expansion glass-ceramic. If MgO is present in the glass-ceramic, an advantageous MgO lower limit may be 0.05 mol% or 0.1 mol% or 0.15 mol% or 0.2 mol% or 0.25 mol% or 0.3 mol%. Certain variants may also contain at least 0.35 mol% or 0.4 mol% or 0.45 mol% or 0.5 mol% or more than 0.5 mol% of MgO. One advantageous variant of the glass-ceramic may be free of MgO.

The glass-ceramic may contain zinc oxide (ZnO) with a content of 0 to 1.5 mol%. An advantageous upper limit may be 1.5 mol%. If the ZnO content is too high, the material exhibits a thermal hysteresis of 0.1 ppm or more in the claimed temperature range. A further advantageous upper limit may be not more than 1.45 mol%, not more than 1.4 mol%, not more than 1.35 mol%, not more than 1.3 mol%, not more than 1.25 mol%, not more than 1.2 mol%, not more than 1.15 mol%, not more than 1.1 mol%, not more than 1.05 or not more than 1.0 mol%. Certain variants may also contain not more than 0.95 mol% or not more than 0.9 mol% or not more than 0.85 mol% or not more than 0.8 mol% of ZnO. If ZnO is present in the glass-ceramic, an advantageous ZnO lower limit may be 0.05 mol% or 0.1 mol% or 0.15 mol% or 0.2 mol% or 0.25 mol% or 0.3 mol%. Certain variants may also contain 0.35 mol% or 0.4 mol% or 0.45 mol% or 0.5 mol% or more than 0.5 mol% of ZnO. One advantageous variant of the glass-ceramic may be free of ZnO.

The glass-ceramic further contains at least one crystal nucleating agent selected from the group consisting of $TiO_2$, $ZrO_2$ $Ta_2O_5$, $Nb_2O_5$, $SnO_2$, $MoO_3$, $WO_3$ and $HfO_2$. Nucleating agent may be a combination of two or more of the stated components. A further advantageous nucleating agent may be $HfO_2$. In one advantageous embodiment, therefore, the glass-ceramic comprises $HfO_2$ and at least one crystal nucleating agent selected from the group consisting of $TiO_2$, $ZrO_2$ $Ta_2O_5$, $Nb_2O_5$, $SnO_2$, $MoO_3$ and $WO_3$. The sum total of the fractions of the nucleating agents is preferentially at least 1.5 mol%, preferably at least 2 mol% or more than 2 mol%, more preferably at least 2.5 mol%, in certain variants at least 3 mol%.

An upper limit may be not more than 6 mol%, preferentially not more than 5 mol%, preferably not more than 4.5 mol% or not more than 4 mol%. In particularly advantageous variants, the stated upper and lower limits are applicable to the sum total of $TiO_2$ and $ZrO_2$.

The glass-ceramic may contain titanium oxide ($TiO_2$) preferentially with a fraction of at least 0.1 mol%, advantageously at least 0.5 mol%, preferentially at least 1.0 mol%, preferably at least 1.5 mol%, preferably at least 1.8 mol% and/or preferentially at most 5 mol%, advantageously at most 4 mol%, more preferably at most 3 mol%, further preferably at most 2.5 mol%, preferably 2.3 mol%. $TiO_2$-free variants of the glass-ceramic of the invention are possible.

The glass-ceramic may advantageously further contain zirconium oxide ($ZrO_2$) in a fraction of at most 3 mol%, preferentially at most 2.5 mol%, further preferably at most 2 mol%, preferably at most 1.5 mol% or at most 1.2 mol%. $ZrO_2$ may be present preferentially in a fraction of at least 0.1 mol%, more preferably at least 0.5 mol%, at least 0.8 mol% or at least 1.0 mol%. $ZrO_2$ free variants of the glass-ceramic of the invention are possible.

According to certain advantageous variants of the invention, individually or in total, there may be 0 to 5 mol% of $Ta_2O_5$ and/or $Nb_2O_5$ and/or $SnO_2$ and/or $MoO_3$ and/or $WO_3$ present in the glass-ceramic, serving, for example, as alternative or additional nucleating agents or for modulating the optical properties, e.g. refractive index. $HfO_2$ may likewise be an alternative or additional nucleating agent. For modulating the optical properties it is possible in certain advantageous variants for - for example - $Gd_2O_3$, $Y_2O_3$, $HfO_2$, $Bi_2O_3$ and/or $GeO_2$ to be present.

The glass-ceramic may further contain one or more customary refining agents, selected from the group consisting of $As_2O_3$, $Sb_2O_3$, $SnO_2$, $SO_4^{2-}$, F-, Cl-, Br, or a mixture thereof, in a fraction of more than 0.05 mol% or at least 0.1 mol% and/or at most 1 mol%. However, fluorine as refining agent may lower the transparency of the glass-ceramic and/or the chemical resistance, and so this component, if present, is limited preferentially to not more than 0.5 mol%, preferably not more than 0.3 mol%, preferably not more than 0.1 mol%. The glass-ceramic is preferably free of fluorine.

According to one advantageous variant, the glass-ceramic may contain not more than 0.05 mol% of $As_2O_3$ as refining agent, and according to one advantageous embodiment may be free of $As_2O_3$. It may be advantageous for the glass-ceramic, instead of or in addition to preferably not more than 0.05 mol% of $As_2O_3$, to comprise at least one alternative redox refining agent and/or at least one evaporating refining agent and/or at least one decomposing refining agent.

The alternative redox refining agents, which contain multivalent or polyvalent ions able to occur at least in two oxidation states, present in a temperature-dependent equilibrium to one another, where a gas, usually oxygen, is released at high temperatures, include, for example, $Sb_2O_3$, $SnO_2$, $MnO_2$, $CeO_2$ and $Fe_2O_3$.

The evaporating refining agents, which are volatile at high temperatures by virtue of their vapour pressure, include halogens with refining effect, such as Cl, Br and I, for example.

The decomposing refining agents, which decompose at high temperatures while giving off refining gas, and the decomposition product having a sufficiently high gas pressure, include, for example, salts which contain oxo anions, more particularly a sulfate component, which in materials analysis is determined as $SO_3$.

Combinations of the above-stated chemical refining agents may also be advantageous. Advantageous embodiments may comprise:

- $SnO_2$ and/or $Sb_2O_3$ each with advantageously max. 0.05 mol% of $As_2O_3$; or
- $As_2O_3$-free combinations such as: $Sb_2O_3$ with $SnO_2$; $Sb_2O_3$ with Cl, $Sb_2O_3$ with $SO_3$; or
- $As_2O_3$-free and $Sb_2O_3$-free combinations such as: $SnO_2$ with Cl, $SnO_2$ with $SO_3$, Cl with $SO_3$.

The above glass compositions may optionally contain additions of colouring oxides, such as, for example, $Nd_2O_3$, $Fe_2O_3$, CoO, NiO, $V_2O_5$, $MnO_2$, CuO, $CeO_2$, $Cr_2O_3$, rare earth oxides in contents of, in each case individually or in total, 0 - 3 mol%. Preferred variants are free of colouring oxides.

$B_2O_3$ may have an adverse effect on the transparency of the glass-ceramic. The content of this component, therefore, in one advantageous variant is limited to < 0.2 mol%, preferably at most 0.1 mol%. Preferred variants are free of $B_2O_3$.

According to one advantageous embodiment of the present invention, the composition is free of components not mentioned above.

According to one advantageous embodiment of the present invention, the glass-ceramic of the invention or the green glass consists preferentially to an extent of at least 90 mol%, more preferably to an extent of at least 95 mol%, most preferably to an extent of at least 99 mol%, of the abovementioned components, and preferably of the components $SiO_2$, $Al_2O_3$, $Li_2O$, MgO, ZnO, $P_2O_5$, $R_2O$, RO and nucleating agents.

According to one advantageous development of the glass-ceramic, it is substantially free of a glass component or two or more glass components selected from the group consisting of PbO, $B_2O_3$, CrOs, F, and Cd compounds.

According to the invention, the expression "X-free" or "free of a component X" means that the glass-ceramic substantially does not contain this component X, i.e. that such a component is present at most as an impurity in the glass, but is not added to the composition as an individual component. For other glass components, higher impurity contents of up to not more than 0.1 mol%, preferably not more than 0.05 mol%, advantageously not more than 0.01 mol%, advantageously not more than 0.005 mol%, for certain components advantageously not more than 0.003 mol%, based in each case on one component, may be possible. X here represents any component, for example PbO.

The glass-ceramics of the invention comprise high quartz solid solution as the main crystal phase. The main crystal phase is the crystalline phase having the greatest vol% fraction in the crystal phase. High quartz solid solution is a metastable phase which, depending on the crystallization conditions, changes its composition and/or structure or is transformed into a different crystal phase. The high quartz-containing solid solutions have very low thermal expansion or even falling thermal expansion with rising temperature. In one advantageous configuration, the crystal phase contains no ß-spodumene and no keatite.

Advantageous configurations of the LAS glass-ceramic have a crystal phase fraction of less than 75 vol% and/or advantageously more than 45 vol%. The crystal phase consists of high quartz solid solution, which is also called β-eucryptite solid solution. The average crystallite size of the high quartz solid solution is advantageously < 100 nm, preferentially < 80 nm, preferably < 70 nm. The effect of the small crystallite size is that the glass-ceramic is transparent and can also be more effectively polished. In certain advantageous variants, the average crystallite size of the high quartz solid solution may be ≤ 60 nm, preferentially ≤ 50 nm. The crystal phase, its fraction and the average crystallite size are determined in a known manner by means of x-ray diffraction analysis.

According to one embodiment of the present invention, a transparent glass-ceramic is produced. The transparency allows numerous properties of such a glass-ceramic to be assessed more effectively, in particular, of course, the internal quality of the glass-ceramic. The glass-ceramics of the invention are transparent, meaning that they have an internal transmission of at least 70% in the wavelength range from 350 to 650 nm. $B_2O_3$ and/or relatively high fluorine contents may reduce the transparency. Advantageous variants therefore do not contain one or both of the stated components. Additionally, the glass-ceramics produced in the context of the invention are pore-free and crack-free. In the context of the invention, "pore-free" means a porosity of less than 1%, preferably less than 0.5%, more preferably of less than 0.1%. A crack is a gap, i.e. discontinuity, in an otherwise continuous structure.

In order to enable the manufacture of a homogeneous glass-ceramic in industrial-scale production plant, it is advantageous if the processing temperature Va or the T4 value of the parent green glass of the glass-ceramic is advantageously not more than 1330°C, preferably not more than 1320°C. Certain advantageous variants may have a processing temperature of not more than 1310°C or not more than 1300°C or less than 1300°C. The processing temperature Va is the temperature at which the melt has a viscosity of $10^4$ dPas. Homogeneity relates in particular to the homogeneity of the CTE of the glass-ceramic over a large volume, and also a small number of, preferably freedom from, inclusions such as bubbles and particles. This is a quality feature of the glass-ceramic and a prerequisite for use in precision components, especially in very large precision components.

It is additionally advantageous if the T3 value of the parent green glass of the glass-ceramic is advantageously not more than 1550°C, further preferably not more than 1525°C and more preferably not more than 1500°C. Certain embodiments, indeed, have T3 values of not more than 1490°C or not more than 1450°C. When the values are situated in this range, the green glass has good meltability and homogenizability.

The processing temperature is determined by the composition of the glass-ceramic. Since the glass network-forming $SiO_2$ component in particular is regarded for the purpose of increasing the viscosity and hence the processing temperature, the maximum $SiO_2$ content should be selected in line with the stipulations mentioned above. Moreover, the alkali metal oxide content of the invention and the total MgO + ZnO content lower the viscosity of the melt, causing the processing temperature to fall. This leads to an improvement in the homogeneity of the melt and hence of the green glass body generated, and of a glass-ceramic resulting from them.

CTE

The glass-ceramics of the invention have zero expansion (see table 1), meaning that they have an average coefficient of thermal expansion CTE in the range from 0 to 50°C of at most $0 \pm 0.1 \times 10^{-6}$/K. Certain advantageous

variants even have an average CTE in the range from 0 to 50°C of at most $0 \pm 0.05 \times 10^{-6}$/K. For particular applications it may be advantageous if the average CTE over a wider temperature range, for example in the range from -30°C to +70°C, preferentially in the range from -40°C to +80°C, is at most $0 \pm 0.1 \times 10^{-6}$/K, i.e. if there is zero expansion.

For the determination of the CTE-T curve of the glass-ceramics and precision components of the invention and of the comparative examples, the differential CTE(T) is first determined. The differential CTE(T) is determined as a function of the temperature. The CTE is then defined according to the following formula (1):

$$CTE\ (T) = (1 / l_0) \times (\partial l / \partial T) \qquad (1)$$

To create a $\Delta l/l_0$-T curve or an expansion curve or plot of the change in length $\Delta l/l_0$ of a test specimen (glass-ceramic or precision component) against the temperature, it is possible to measure the temperature-dependent change in length of the length of a test specimen from the starting length $l_0$ at the starting temperature $t_0$ to the length It at the temperature t. Temperature intervals chosen in this case are preferentially small, being for example 5°C or 3°C or 1°C, for the determination of a measurement point. Such measurements may be conducted, for example, by dilatometric methods, interferometric methods, for example the Fabry-Pérot method, i.e. the evaluation of the shift in the resonance peak of a laser beam injected into the material, or other suitable methods. In the context of the invention, the dilatometric method has been chosen, with a temperature interval of 1°C on rod-shaped samples of the test specimens with length 100 mm and a diameter of 6 mm for the purpose of ascertaining the CTE. The chosen method of determining the CTE has an accuracy of preferentially at least $\pm$ 0.05 ppm/K, preferably of at least $\pm$ 0.03 ppm/K. Of course, however, the CTE may also be determined by methods which have an accuracy of at least $\pm$ 0.01 ppm/K, preferably at least $\pm$ 0.005 ppm/K or, according to certain embodiments, even of at least $\pm$ 0.003 ppm/K or at least $\pm$ 0.001 ppm/K.

The $\Delta l/l_0$-T curve is used to calculate the average CTE for a particular temperature interval, for example for the temperature range from 0°C to 50°C.

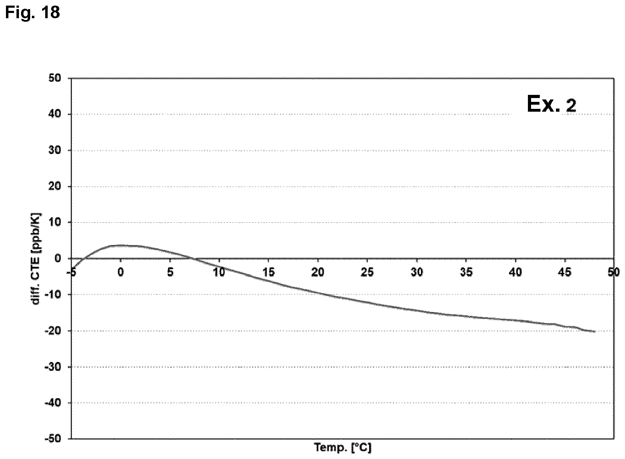

A CTE-T curve is obtained through the derivative of the $\Delta l/l_0$-T curve. The CTE-T curve can be used to determine the zero crossing, the slope of the CTE-T curve within a temperature interval. The CTE-T curve is used to determine the shape and position of an advantageous CTE "plateau" formed in certain variants (see below and Figure 18).

One advantageous configuration of a precision component comprising a glass-ceramic of the invention (especially in the form of a substrate) has a high CTE homogeneity. The value of CTE homogeneity ("total spatial variation of CTE") is understood here as what is called the peak-to-valley value, i.e. the difference between the respectively highest and lowest CTE values of the samples taken from a precision component. The CTE homogeneity is therefore based not on the CTE of the material of the component but rather on the spatial variation of the CTE over the section under consideration or the entire precision component. For determining the CTE homogeneity, a multiplicity of samples are taken from different sites in a precision component and the CTE value is determined for each of them, reported in ppb/K, where 1 ppb/K = $0.001 \times 10^{-6}$/K. The CTE homogeneity, i.e. the spatial variation of the CTE, over the entire precision component is advantageously at most 5 ppb/K, preferentially at most 4 ppb/K, most preferably at most 3 ppb/K. A method for ascertaining the CTE homogeneity and measures for achieving the CTE homogeneity are described in WO 2015/124710 A, the disclosure content of which is incorporated in full into this application.

Thermal hysteresis

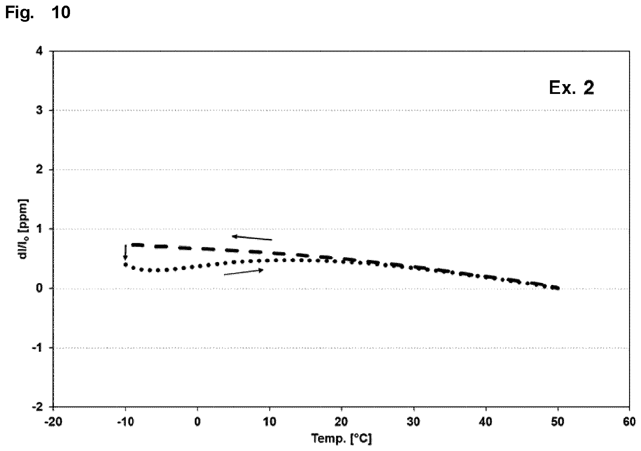

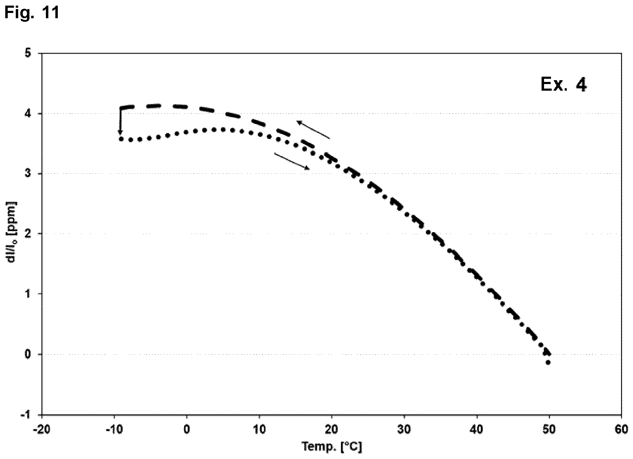

In the context of the invention, the glass-ceramic, at least in the temperature range from 15°C to 35°C, has a thermal hysteresis of < 0.1 ppm and is therefore hysteresis-free (see Figures 10 and 11). At any temperature within the temperature interval from 15°C to 35°, therefore, the glass-ceramic, after having been subjected to a change in temperature with a heating rate or cooling rate of 36 K/h, i.e. 0.6 K/min, after a hold time of 5 hours at constant temperature exhibits an isothermal change in length of less than 0.1 ppm.

"Thermal hysteresis of < 0.1 ppm at least in the temperature interval from 15°C to 35°C" therefore means that within this temperature interval, after a thermal treatment and subsequent holding at constant temperature, the glass-ceramic has a change in length of < 0.1 ppm, based on a heating rate or cooling rate of 36 K/h, i.e. 0.6 K/min, and a hold time of 5 hours at-10°C. The feature of thermal hysteresis therefore describes the thermal characteristics of the glass-ceramic or of a component manufactured from it, over time.

In advantageous configurations, this freedom from hysteresis is present at least in a temperature range from 15 to 40°C or at least in the temperature range of 10°C to 35°C, preferentially at least in the temperature range of 15 to 45°C, preferentially at least in the temperature range of 15°C to 50°C. With particular preference the temperature range of the freedom from hysteresis is even wider, and so the material or the component is also suitable for applications at temperatures of up to at least 100°C and advantageously above as well. With particular preference, the temperature range of the freedom from hysteresis is even wider. Preferred application temperatures are in the -60 to 100°C range, more preferably from -40°C to +80°C. Particular variants of the present invention relate to glass-ceramics and precision components for application temperatures $T_A$ for example in the range of 5°C to 20°C or $T_A$ of 22°C, 40°C, 60°C, 80°C and 100°C, which are preferably hysteresis-free at these temperatures as well.

The thermal hysteresis was determined for the glass-ceramics and precision components of the invention and for the comparative examples using a precision dilatometer capable of ascertaining the CTE with a reproducibility of ± 0.001 ppm/K and ± 0.003 ppm/K absolutely, with a temperature interval of 1°C, on rod-shaped samples of length 100 mm and a diameter of 6 mm of the test specimens (i.e. sample of the precision component or sample of the glass-ceramic), in accordance with the method and apparatus construction disclosed in DE 10 2015 113 548 A, the disclosure content of which is incorporated in full into this application. For each sample analysed, the change in length $\Delta l/l_0$ was determined as a function of the temperature between 50°C, cooling at a cooling rate of 36 K/h, to -10°C. After an isothermal hold time of 5 hours at -10°C, the sample was heated at a heating rate of 36 K/h to 50°C and the change in length $\Delta l/l_0$ was recorded as a function of the temperature. The thermal hysteresis characteristics of a test specimen are considered at -5°C, 0°C, 5°C, 10°C, 15°C, 19°C, 22°C, 35°C and 40°C. These points are representative of the temperature range from -10°C to 50°C, since hysteresis decreases with rising temperature within the temperature interval stated. Hence a sample which is hysteresis-free at 22°C or 35°C also shows no hysteresis in the range up to 50°C.

For determining the thermal hysteresis at 15°C, the individual measurement values of the change in length for the five temperatures of 13°C, 14°C, 15°C, 16°C and 17°C, i.e. two temperature points above and two temperature points below 15°C, were recorded both during heating and during cooling of the sample in the range of -10°C to 50°C at the rate of 36 K/h. The differences in the measurement values for heating curve and cooling curve at these five measurement points were used to form the average, which is listed as "Hyst.@15°C" in the unit [ppm] in the tables.

For determining the thermal hysteresis at 35°C, correspondingly, the individual measurement values of the change in length for the five temperatures of 33°C, 34°C, 35°C, 36°C and 37°C, i.e. two temperature points above and two temperature points below 35°C, were recorded both during heating and during cooling of the sample in the range of -10°C to 50°C at the rate of 36 K/h. The differences in the measurement values for heating curve and cooling curve at these five measurement points were used to form the average, which is listed as "Hyst.@35°C" in the unit [ppm] in the tables.

Corresponding procedures were adopted for the other temperature points referred to above.

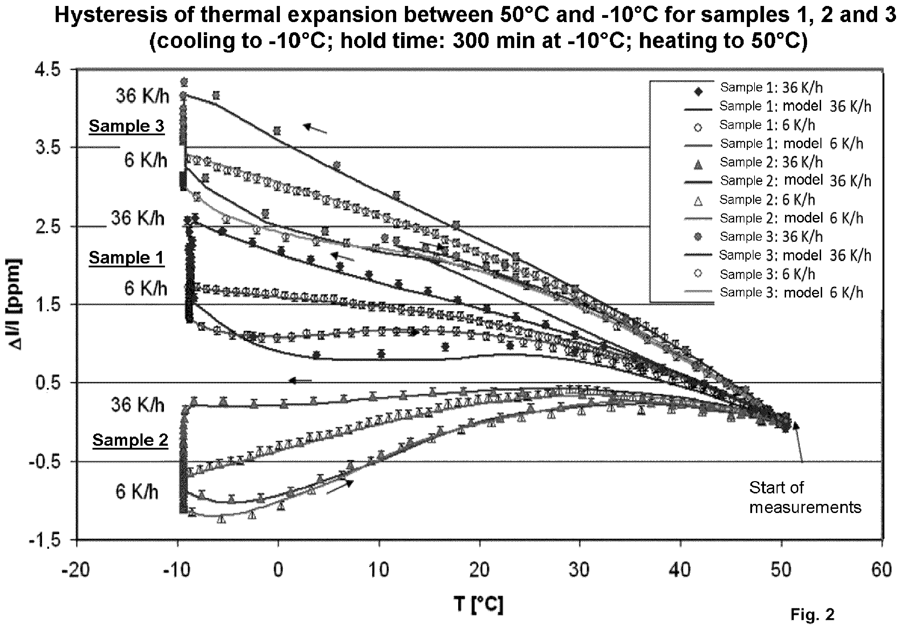

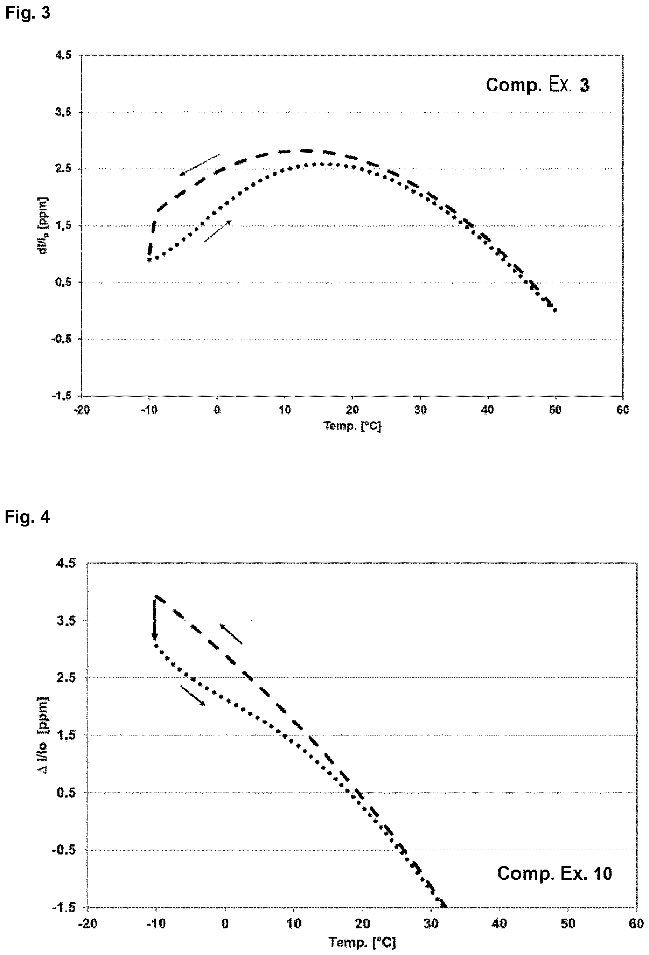

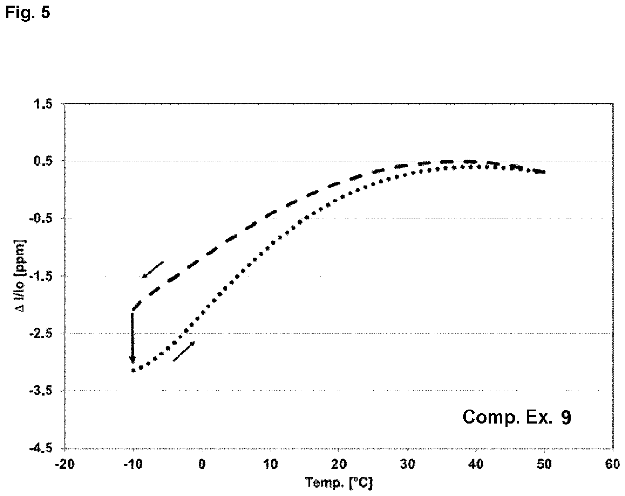

Figures 2 to 11 show thermal hysteresis curves of glass-ceramics of the invention (Figures 10 and 11) and of known glass-ceramics (Figures 2 and 4 to 9) and, respectively, of a non-inventive glass-ceramic (Figure 3). For better comparability, a spectrum of 6 ppm on the y-axis was again chosen for the representation in the figures.

Figures 2 to 8 show the thermal hysteresis curves of known/non-inventive materials that can be used for precision components. The cooling curves (dashed) and heating curves (dotted) are each clearly spaced apart from one another, specifically at lower temperatures, meaning that they have a clearly separate profile. At 15°C, the distance is more than 0.1 ppm, and up to around 1 ppm according to the comparative example. In other words, the materials and the precision components manufactured from them show considerable thermal hysteresis within the relevant temperature range from at least 15° to 35°C.

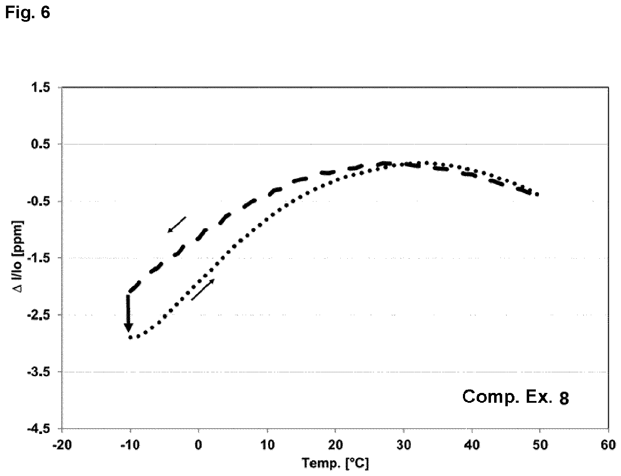

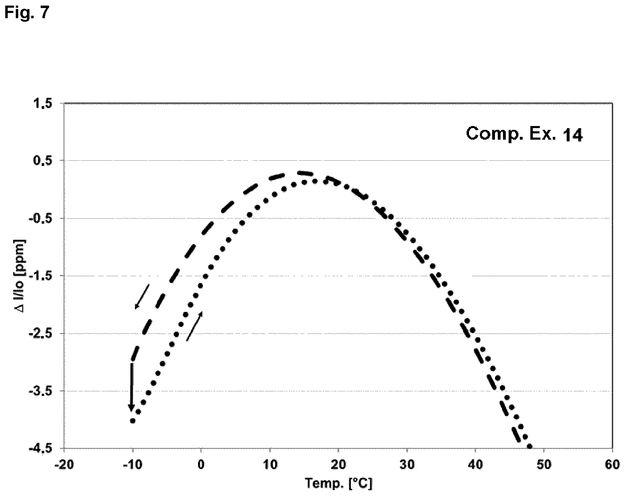

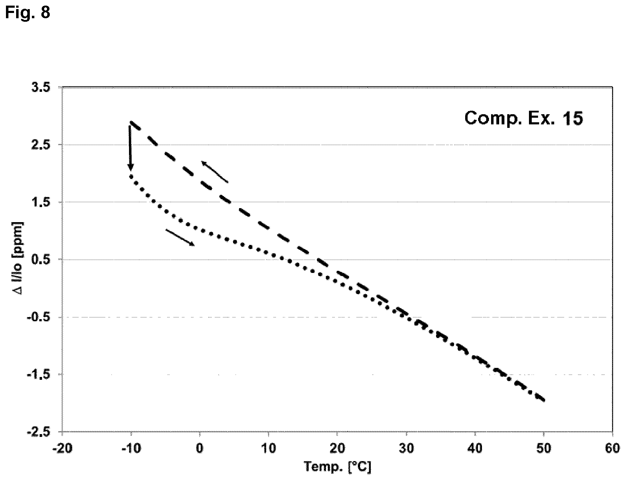

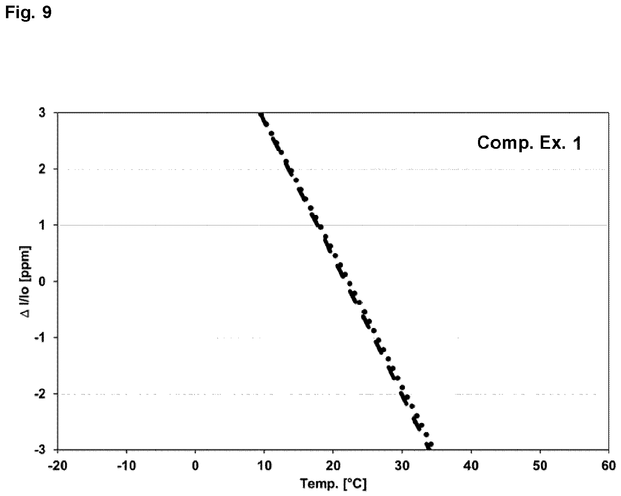

The LAS glass-ceramics analysed that are represented in Figures 2 to 5 (comparative examples 3, 9 and 10 in table 2) all contain MgO and ZnO and also in most cases $R_2O$ as well, and exhibit thermal hysteresis over wide ranges within the temperature interval of 15°C to 35°C. Figures 6 and 7 show the hysteresis curves of LAS glass-ceramics (comparative examples 8 and 14 in table 2), which are MgO-free but ZnO-containing. Below 19°C, both materials show significantly increasing thermal hysteresis. Figure 8 shows the hysteresis curve of an LAS glass-ceramic (comparative example 15 in table 2), which is ZnO-free but MgO-containing. This material likewise shows significantly increasing thermal hysteresis below 22°C. As is apparent from Figure 9, this known material (comparative example 1 in table 2) shows no thermal hysteresis, but the steep curve profile shows that it is not a zero-expansion material. The average CTE here is -0.24 ppm/K.

LAS glass-ceramics and precision components of the invention have a defined content of the sum total of MgO + ZnO of > 0.5 mol% to 1.5 mol% in combination with a defined $R_2O$ content of more than 0.5 mol%. As is apparent from Figures 10 and 11, the heating curves and the cooling curves at least in the temperature range of 15°C to 35°C are situated over one another, meaning that the glass-ceramics are hysteresis-free. The materials, however, are hysteresis-free not only in the range of 15°C to 35°C, but also at least in the range of 15 to 40°C or 15 to 45°C.

Further expansion properties

Advantageous embodiments of the invention have further advantageous expansion features:
For describing the expansion characteristics of a test specimen (glass-ceramic or precision component), a TCL value is frequently reported, with TCL meaning "total change of length". Within the context of the invention, the TCL value is reported for the temperature range of 0°C and 50°C. It is ascertained from the normalized $\Delta l/l_0$-T curve (also $dl/l_0$-T curve in the figures) of the respective test specimen, with "normalized" meaning that the change in length at 0°C is 0 ppm. The $\Delta l/l_0$-T curve for determining the TCL is created by the same method as described above in connection with the determination of CTE in the context of the invention.

The TCL value is the distance between the highest dl/lo value and the lowest dl/lo value within this temperature range:

$$\text{TCL } (0;50°C) = |\ dl/l_0 \text{ max. }| + |\ dl/l_0 \text{ min.}| \qquad (2)$$

where "dl" denotes the change in length at the respective temperature and "lo" denotes the length of the test specimen at 0°C. The calculation is based in each case on the magnitudes of the $dl/l_0$ values.

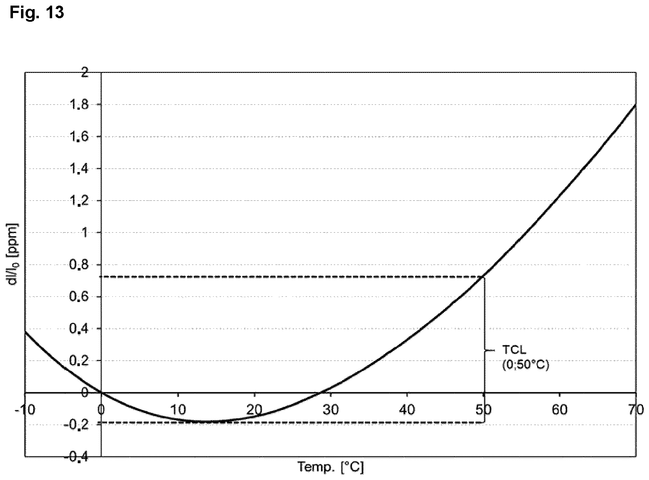

Figures 13 to 16 show expansion curves of known materials, from which the $dl/l_0$ max values and dl/lo min values can each be read off for calculating the TCL value (see also below). The expansion curves each show a curved profile in the temperature range of 0°C to 50°C.

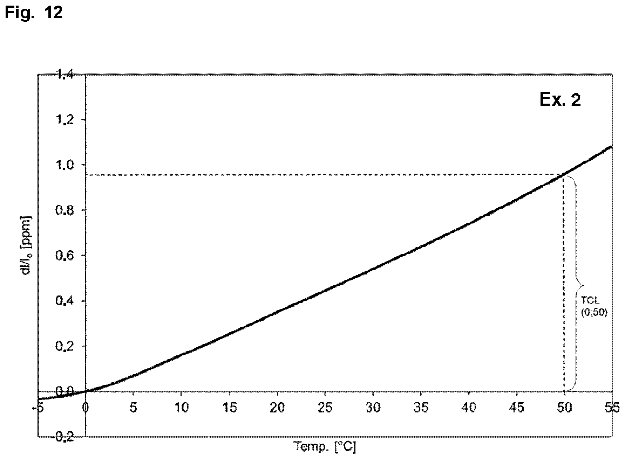

In the context of the present invention, by contrast, a flat profile of the expansion curve in the temperature range of 0°C to 50°C is an advantageous feature of the glass-ceramic and of a precision component (see Figure 12). For certain advantageous variants, depending on the field of use of the component, a flat profile of the expansion curve may also be desirable for another temperature range, especially in a range of (20;40), (20;70) and/or (-10;30).

As a statement as to the extent to which the curve profile of the thermal expansion differs from a simple linear profile, for one advantageous embodiment of the invention the index F is introduced as a measure of the flatness of the expansion curve, so enabling a classification of CTE curves:

$$F = \text{TCL } (0;\ 50°C)\ /\ |\text{expansion } (0;\ 50°C)| \qquad (3)$$

The index F is calculated by forming the quotient of the TCL (0;50) value [in ppm] (see above) and the difference in expansion between the temperature points of 0°C and 50°C [in ppm]. Since the expansion curve for determining the TCL is by definition normalized in such a way that the change in length at 0°C is 0 ppm, the "difference in expansion between the temperature points at 0°C and 50°C" corresponds to the "expansion at 50°C", as indicated in the tables. The index F is calculated using the magnitude of the expansion at 50°C.

It is advantageous here if for the respective material or component, the index F is <1.20, preferably < 1.15, preferably < 1.10, preferably at most 1.05. The closer the index F is to 1, the flatter the expansion curve.

It is apparent from Figure 12 that one advantageous configuration of the LAS glass-ceramic has a flat profile of the expansion curve (here F = 1), both in the temperature range of 0°C to 50 °C and in a broader temperature range. In comparison to this, Figures 13 to 17 show that known materials exhibit a substantially steeper and curved profile of the expansion curves within the temperature ranges under consideration.

Figure 12 shows, by way of example, the expansion curve of an advantageous glass-ceramic with reference to an advantageous ceramization of composition example 2. For the representation, a section of 1.6 ppm on the y-axis was chosen. The highest expansion value (dl/lo max) is at +50°C (dl/lo is +0.96 ppm, i.e. |0.96 ppm|), the lowest expansion value (dl/lo min) is 0 ppm. The difference in expansion between the temperature points of 0°C and 50°C, corresponding to the magnitude of the "expansion at 50°C", is 0.96 ppm. This is used to calculate the index F for this material as follows: F (example 2 from table 1) = 0.96 ppm / 0.96 ppm = 1.00.

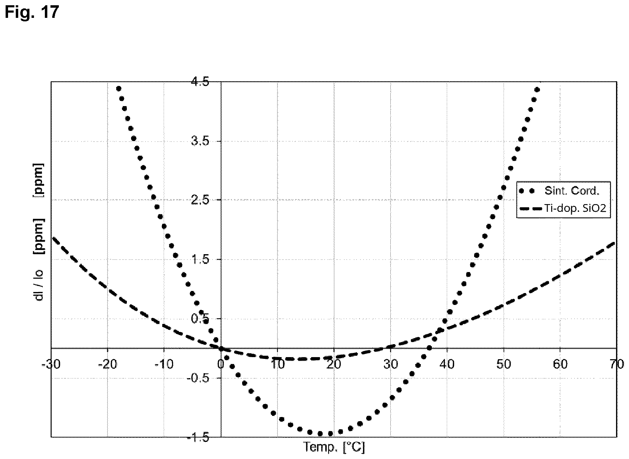

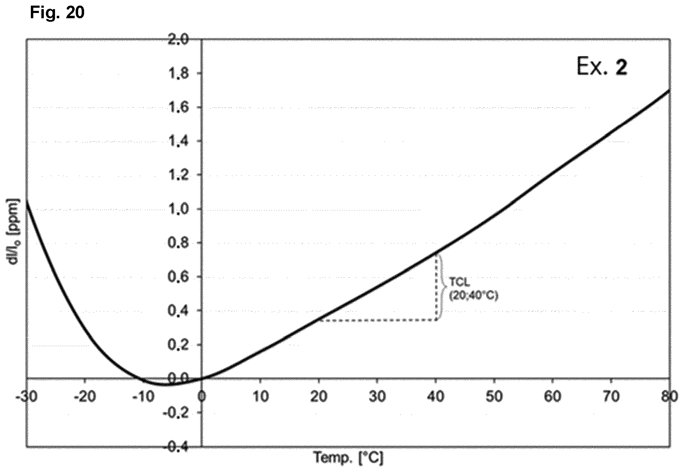

Advantageous glass-ceramics and precision components of the invention therefore have a very flat profile of their expansion curves, in the temperature range from 0°C to 50°C, for example, meaning that in the temperature range under consideration they not only have zero expansion but also exhibit a low fluctuation in the change in lengthwise expansion and hence in the differential CTE in this range. As is apparent, for example, from Figure 20, advantageous examples of the invention also have a flat profile of their expansion curves over an even broader temperature range. See, by comparison, the substantially steeper profiles of the expansion curves of known materials based on the same temperature range in Figure 17. The expansion characteristics can also be observed in other selected temperature ranges, especially (-10;30), (20;40), (20;70), as described later on below.

In comparison to the advantageous embodiments of the glass-ceramics and precision components, Figures 13 to 17 show the expansion characteristics of known materials and precision components manufactured from them, and the index F can be calculated from each of these. The expansion characteristics of the materials or precision components, as represented in Figures 13 to 17, were ascertained using the same dilatometer under comparable conditions to the expansion characteristics of the advantageous embodiments of the glass-ceramics as represented in Figure 12. Overall, the known materials show a curved profile of the expansion curves:

Figure 13 shows the expansion curve of a commercially available titanium-doped quartz glass. As can be seen, the sum total of the magnitudes of the expansion value here at +50°C (dl/lo max is +0.73 ppm, i.e. |0.73 ppm|) and of the expansion value at 14°C (dl/lo min is -0.19 ppm, i.e. |0.19 ppm|) gives a TCL(0;50) value of around 0.92 ppm. The difference in expansion between the temperature points of 0°C and 50°C, corresponding to the magnitude of the "expansion at 50°C", is 0.73 ppm. The index F for this material is calculated from this as follows: F (titanium-doped $SiO_2$) = 0.92 ppm / 0.73 ppm = 1.26.

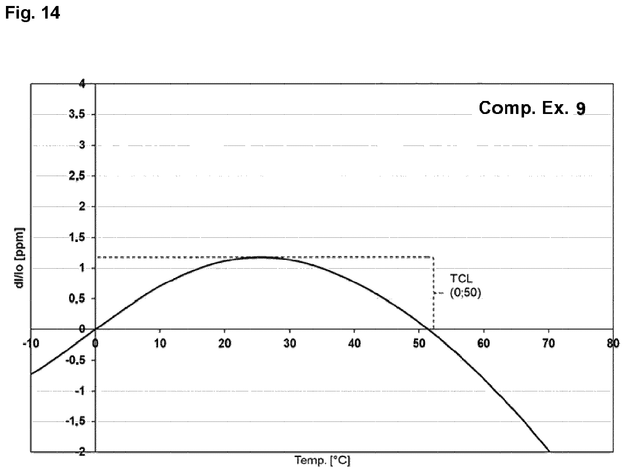

The index F is calculated correspondingly for a known LAS glass-ceramic and a corresponding precision component (see Figure 14), as follows: F (known LAS glass-ceramic) = 1.19 ppm / 0.11 ppm = 10.82.

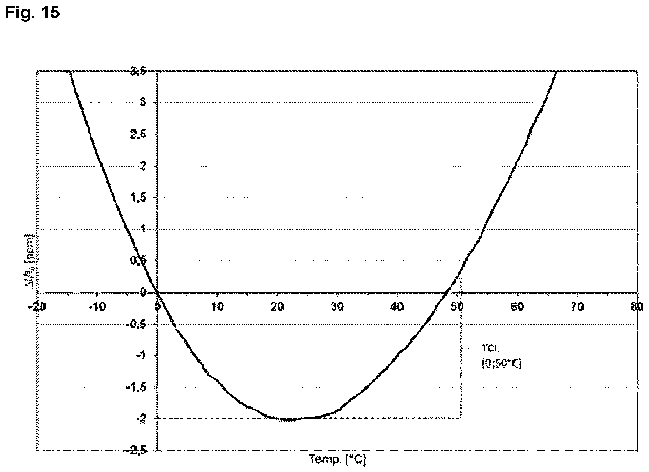

The index F is calculated correspondingly for a known cordierite glass-ceramic and a corresponding precision component (see Figure 15), as follows: F (known cordierite glass-ceramic) = 2.25 ppm / 0.25 ppm = 9.

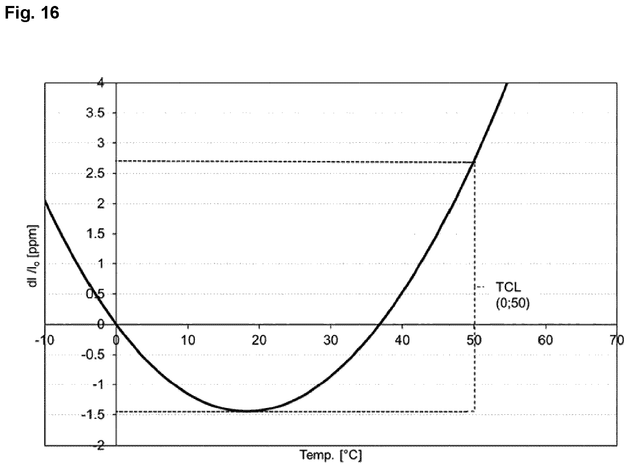

The index F is calculated correspondingly for a known sintered cordierite ceramic and a corresponding precision component (see Figure 16), as follows: F (known sintered cordierite ceramic) = 4.2 ppm / 2.71 ppm = 1.55.

Glass-ceramics with a flat profile of the expansion curves are very advantageous, since it is then possible not just to optimize a precision component for the subsequent application temperature but also for it to have likewise low thermal expansion, for example, under relatively high and/or relatively low temperature loads, during production, for example. Precision components for microlithography, EUV microlithography (also "EUV lithography" or "EUVL" for short) and metrology are typically used under standard cleanroom conditions, in particular a room temperature of 22°C. The CTE may be matched to this application temperature. However, such components are subjected to various process steps, such as coating with metallic layers, and cleaning, structuring and/or exposure operations, for example, in which temperatures may be higher or in some cases lower than those prevailing in the case of subsequent use in a cleanroom. Advantageous glass-ceramics and precision components manufactured from them that have an index F of <1.20 and hence optimized zero expansion not just at application temperature but also at possibly higher and/or lower temperatures during production are therefore very advantageous. Properties such as freedom from hysteresis and an index F < 1.20 are particularly advantageous if the precision component or a glass-ceramic is used in EUV lithography, i.e. if, for example, the precision component is an EUVL mirror or EUVL mask blank or a corresponding substrate therefor, since the mirrors or masks in particular in EUV lithography become heated very nonuniformly at different points or in beam direction as a result of being irradiated with high-energy radiation. For such usage conditions, it is advantageous if the precision component or glass-ceramic exhibits a low slope of the CTE-T curve in a temperature range around the application temperature (see below).

A feature of advantageous glass-ceramics and precision components that are even better optimized to a later application temperature at 20 or 22°C is that they have a relative change in length ($dl/l_0$) of $\leq$ |0.10| ppm, preferably of $\leq$ |0.09| ppm, particularly preferably of $\leq$ |0.08| ppm and especially preferably of $\leq$ |0.07| ppm in the temperature range from 20°C to 30°C and/or a relative change in length ($dl/l_0$) of $\leq$ |0.17| ppm, preferably of $\leq$ |0.15| ppm, particularly preferably of $\leq$ |0.13| ppm and especially preferably of $\leq$ |0.11| ppm in the temperature range from 20°C to 35°C.

Alternatively or additionally, a feature of such optimized glass-ceramics and precision components may be that they have a relative change in length ($dl/l_0$) of $\leq$ |0.30| ppm, preferably of $\leq$ |0.25| ppm, particularly preferably of $\leq$ |0.20| ppm and especially preferably of $\leq$ |0.15| ppm in the temperature range from 20°C to 40°C. The features relating to the relative change in length based on the different temperature intervals may preferably be taken from the $dl/l_0$ curves of Figures 12 to 17. Figures for the relative change in length ($dl/l_0$) refer of course to the magnitude of the respective value.

A zero-expansion, hysteresis-free material having such advantageous expansion characteristics is particularly suitable for use as a substrate for an EUVL mirror or as an EUVL mirror which is heated to different degrees in operation, as a result for example of the respective exposure mask, in regions of light and shadow. On account of the above-stated low relative change in length, an EUVL mirror formed from the advantageous glass-ceramic has relatively low local gradients (or local slopes) in the topography of the mirror surface than an EUVL mirror manufactured using known materials. The same is applicable, analogously, to EUVL mask blanks or EUVL masks or EUVL photomasks.

Particularly in the case of a glass-ceramic which within the temperature range under consideration exhibits a very flat profile of the expansion curve, which is close to 0 ppm or fluctuates around 0 ppm - which constitutes advantageous expansion characteristics overall - it may be advantageous, alternatively or additionally to the index F, to introduce a further measure of the flatness of the expansion curve, in which the expansion curve is considered not in the temperature range of (0;50), but instead in a different temperature interval (T.i.), preferably in the temperature range of (20;40), (20;70) and/or (-10; 30). This allows the expansion characteristics to be classified in relation to the later fields of application.

The alternative index $f_{T.i.}$ has the unit (ppm/K) and is defined as:

$$f_{T.i.} = TCL_{(T.i.)} \text{ / width of the temperature interval (T.i.)} \qquad (4)$$

where T.i. describes the temperature interval under consideration in each case.

The $TCL_{(T.i.)}$ value is the distance between the highest $dl/lo$ value and the lowest $dl/lo$ value within the temperature range (T.i.) under consideration in each case, where the expansion curve for the determination of $TCL_{(T.i.)}$ as well is by definition normalized in such a way that the change in length at 0°C is 0 ppm. In other words, for example:

$$TCL_{(20;40°C)} = | dl/l_0 \text{ max.} | + | dl/l_0 \text{ min.}| \qquad (5)$$

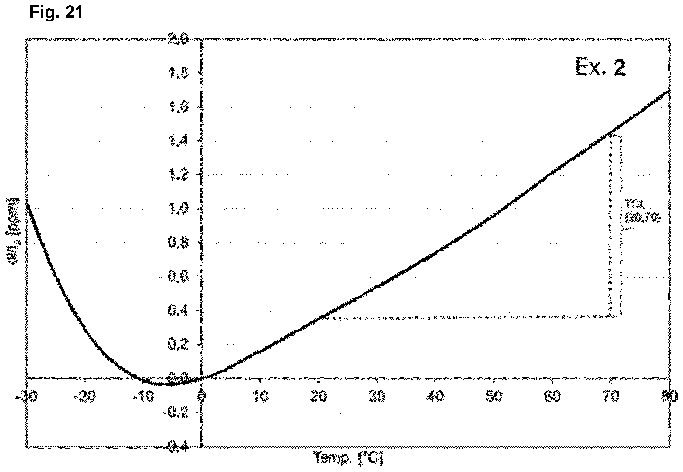

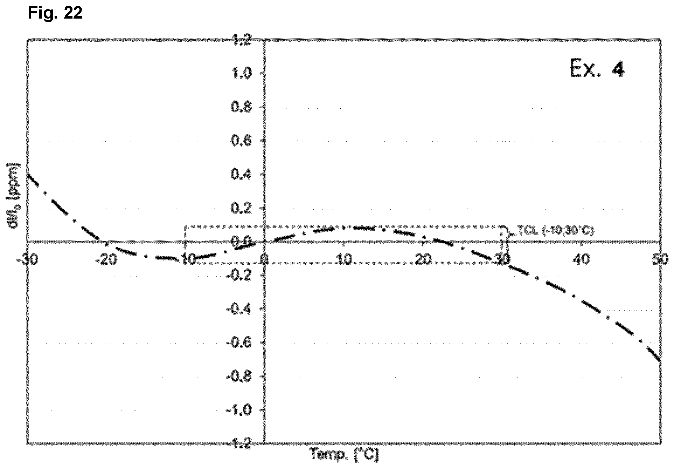

where "dl" denotes the change in length at the respective temperature and "lo" denotes the length of the test specimen at 0°C. The calculation is based in each case on the magnitudes of the $dl/l_0$ values when the curve fluctuates around zero in the temperature interval under consideration (e.g. Figure 22). Otherwise, the $TCL_{(T.i.)}$ is the distance ascertained from the difference between the highest dl/lo value and the lowest dl/lo value within the temperature interval (T.i.) under consideration in each case, this being self-evident and apparent from the figures (e.g. Figures 20, 21). The $TCL_{(T.i.)}$, expressed generally, may be calculated as follows:

$$TCL_{(T.i.)} = dl/l_0 \text{ max.} - dl/l_0 \text{ min.} \qquad (6)$$

The alternative index $f_{T.i.}$ is calculated according to formula (4) by forming the quotient from the $TCL_{(T.i.)}$ value [in ppm] (see above) and the width of the temperature interval (T.i.) reported in [K] in which the difference in expansion is being considered. The width of the temperature interval considered between 20°C and 40°C is 20K. If, in contrast, the profile of the expansion curve is considered in the interval T.i.= (20;70) or (-10;30), the divisor for formula (4) is 50K or 40K, respectively.

In one advantageous embodiment, the glass-ceramic has an alternative index $f_{(20;40)}$ < 0.024 ppm/K and/or an alternative index $f_{(20;70)}$ < 0.039 ppm/K and/or an alternative index $f_{(-10;30)}$ < 0.015 ppm/K.

Glass-ceramics having a very flat profile of the expansion curves are very advantageous, since it is then possible to optimize a precision component not only for the later application temperature but also, for example, for higher and/or lower temperature loads that can be expected. The alternative index $f_{T.i.}$ is suitable for defining a suitable material in accordance with the specifications required for particular component applications, and for providing a corresponding precision component. Specific precision components and their applications are described later on below and are included here as well.

According to one advantageous embodiment of the glass-ceramic or a component produced from it, it may be advantageous if the alternative index $f_{(20;40)}$ is < 0.024 ppm/K, preferably < 0.020 ppm/K, preferably < 0.015 ppm/K. A hysteresis-free, zero-expansion component having such expansion characteristics in the temperature range of (20;40) has particularly good usability as a precision component for microlithography and EUV microlithography at room temperature. One example of an advantageous glass-ceramic of this kind is represented in Figure 20.

According to one advantageous embodiment of the glass-ceramic or a component produced from it, it may be advantageous if the alternative index $f_{(20;70)}$ is < 0.039 ppm/K, preferably < 0.035 ppm/K, preferably < 0.030 ppm/K, preferably < 0.025 ppm/K, preferably < 0.020 ppm/K. A hysteresis-free, zero-expansion component having such expansion characteristics in the temperature range of (20;70) likewise has particularly good usability as a precision component for microlithography and EUV microlithography. It is particularly advantageous if the component has an equally low thermal expansion at higher temperature loads as well, as may occur, for example, during the production of the precision component, but also locally or over an area in operation. Further details of the temperature loads that occur in the context of EUVL precision components have already been described above in connection with the index F, to which reference is made here for avoidance of repetitions. One example of an advantageous glass-ceramic of this kind is represented in Figure 21.

According to one advantageous embodiment of the glass-ceramic or a component produced from it, it may be advantageous if the alternative index $f_{(-10;30)}$ is < 0.015 ppm/K, preferably <0.013 ppm/K, preferably < 0.011 ppm/K. A hysteresis-free, zero-expansion component having such expansion characteristics in the temperature range of (-10;30) has particularly good usability as a precision component, more particularly as mirror substrates for applications in which temperatures lower than room temperature are among those which may occur; for example, as mirror substrates in astronomy or in Earth observation from space. Corresponding components are described later on below. One example of an advantageous glass-ceramic of this kind is represented in Figure 22.

One particularly advantageous embodiment of a glass-ceramic or a component produced from it has an expansion curve for which at least 2 of the alternative indices $f_{(T.i.)}$ are applicable.

One particularly advantageous embodiment of a glass-ceramic or a component produced from it has an expansion curve for which the index F and at least one of the alternative indices $f_{(T.i.)}$ are applicable.

Figure 18 shows that advantageous configurations of the LAS glass-ceramic and of the precision component have a CTE "plateau". A glass-ceramic having a plateau, i.e. having optimized zero expansion over a broad temperature range, offers the same advantages as have already been described above in connection with the flat profile of the expansion curves and of the index F.

It is advantageous if the differential CTE has a plateau close to 0 ppm/K, meaning that the differential CTE in a temperature interval $T_P$ having a width of at least 40 K, preferably at least 50 K, is less than $0 \pm 0.025$ ppm/K. The temperature interval of the CTE plateau is defined as $T_P$. Advantageously, the differential CTE in a temperature interval $T_P$ having a width of at least 30 K or at least 40 K may be less than $0 \pm 0.015$ ppm/K.

A CTE "plateau" is thus understood to mean a region extending over a section of the CTE-T curve, in which the differential CTE does not exceed a value of $0 \pm 0.025$ ppm/K, preferentially $0 \pm 0.015$ ppm / K, more preferably $0 \pm 0.010$ ppm / K, further preferably $0 \pm 0.005$ ppm / K, i.e. a CTE close to 0 ppb/K.

Advantageously, the differential CTE in a temperature interval $T_P$ having a width of at least 30 K or at least 40 K may be less than $0 \pm 0.015$ ppm/K, i.e. $0 \pm 15$ ppb/K. In one preferred embodiment, a CTE plateau of $0 \pm 0.01$ ppm/K, i.e. $0 \pm 10$ ppb/K, may be formed over a temperature interval of at least 20 K or at least 30 K or at least 40 or at least 50 K. In Figure 18, the curve between -5°C and 15°C, i.e. over a width of around 20 K, in fact shows a CTE plateau of $0 \pm 0.005$ ppm/K, i.e. $0 \pm 5$ ppb/K.

It may be advantageous if the temperature interval $T_P$ is in a range from -10 to +100°C, preferably 0 to 80°C.

The position of the CTE plateau of the glass-ceramic is preferably matched to the application temperature $T_A$ of the precision component. Preferred application temperatures $T_A$ are in the range of -60°C to +100°C, more preferably from -40°C to +80°C. Particular variants of the present invention relate to precision component and glass-ceramics for application temperatures $T_A$ of 0°C, 5°C, 10°C, 22°C, 40°C, 60°C, 80°C and 100°C. The CTE plateau, i.e. the region of the curve that has the low deviation of the differential CTE in the temperature interval $T_p$, may also be situated in the temperature range of [-10;100]; [0;80], [0; 30°C], [10; 40°C], [20; 50°C], [30; 60°C], [40; 70°C] and/or [50; 80°C]. In further advantageous glass-ceramics and precision components, the CTE plateau may also be situated in the temperature range of [-10;30], [0;50], [19:25°C]; [20;40] and/or [20;70].

According to one advantageous embodiment of the invention, the CTE-T curve of the glass-ceramic or precision component in a temperature interval which has at least a width of 30 K, preferably at least a width of 40 K, more preferably at least a width of 50 K, has at least one section of curve with low slope, more particularly a slope of at most $0 \pm 2.5$ ppb/K$^2$, advantageously of at most $0 \pm 2$ ppb/K$^2$, advantageously of at most $0 \pm 1.5$ ppb/K$^2$, preferentially of at most $0 \pm 1$ ppb/K$^2$, preferentially of at most $0 \pm 0.8$ ppb/K$^2$, and even, according to specific variants, of at most $0 \pm 0.5$ ppb/K$^2$.

The temperature interval with low slope is preferably adapted to the application temperature $T_A$ of the precision component. Preferred application temperatures $T_A$ are in the range of -60°C to +100°C, more preferably of -40°C to +80°C. Particular variants of the present invention relate to glass-ceramics and precision component for application temperatures $T_A$ of 0°C, 5°C, 10°C, 22°C, 40°C, 60°C, 80°C and 100°C. The temperature interval with low slope may also be situated in the temperature range of [-10; 100], [0;80], [0; 30°C], [10; 40°C], [20; 50°C], [30; 60°C], [40; 70°C] and/or [50; 80°C]. In further advantageous glass-ceramics and precision components, the temperature interval with low slope may also be situated in the temperature range of [-10;30], [0;50], [19:25°C], [20;40] and/or [20;70].

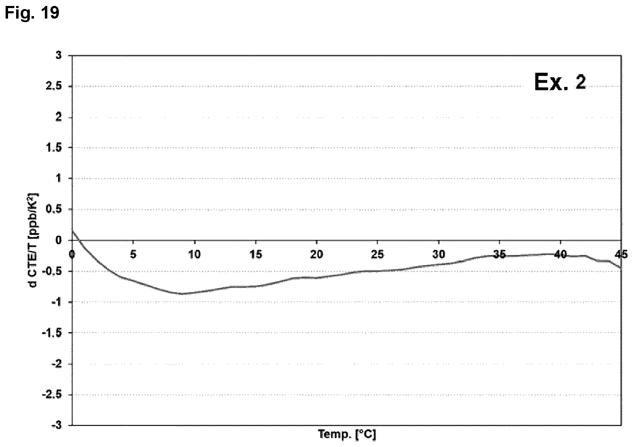

Figure 19 shows the slope of the CTE-T curve in the temperature range from 0°C to 45°C for an advantageous glass-ceramic or precision component on the basis of the composition of example 2 from table 1. The CTE slope is below $0 \pm 1$ ppb/K$^2$ in the entire temperature range, and in an interval of at least 20 K width is in fact below $0 \pm 0.5$ ppb/K$^2$.

Glass-ceramics and precision components having such expansion characteristics are especially readily suitable for EUV lithography applications (e.g. as mirrors or substrates for mirrors or masks or mask blanks), since in this range the requirements with regard to the materials and precision components used for the optical components are becoming increasingly high in relation to extremely low thermal expansion, a zero crossing of the CTE-T curve close to the application temperature, and, in particular, to a low slope of the CTE-T curve. In the context of the invention, advantageous configurations of a glass-ceramic or precision component have a very flat CTE profile, with the profile exhibiting not only a zero crossing but also a very low CTE slope and possibly a very flat plateau.

The feature of the low slope may be present with or without development of an advantageous CTE plateau.

By varying the ceramization temperature and/or ceramization time, it is possible to adapt the expansion curves and/or the CTE profile to different application temperatures. For example, the zero crossing of the CTE-T curve may thus be shifted by raising or lowering the ceramization temperature, or the expansion curve can be adjusted. Alternatively, for increasing or lowering the ceramization temperature, it is also possible to respectively extend or shorten the ceramization time correspondingly.

Advantageous glass-ceramics and precision components additionally have good internal quality. They preferably have at most 5 inclusions per 100 cm$^3$, more preferably at most 3 inclusions per 100 cm$^3$, most preferably at most 1 inclusion per 100 cm$^3$. Inclusions are understood in accordance with the invention to refer both to bubbles and to crystallites having a diameter of more than 0.3 mm.

According to one variant of the invention, precision components are provided which have a diameter or an edge length of at most 800 mm and a thickness of at most 100 mm and have at most 5, preferably at most 3, more preferably at most 1 inclusion(s), in each case per 100 cm$^3$, having a diameter of a size of more than 0.03 mm.

As well as the number of inclusions, the maximum diameter of the inclusions detected also serves as a measure of the level of the internal quality. The maximum diameter of individual inclusions within the total volume of a precision component having a diameter of less than 500 mm or edge lengths of less than 500 mm is preferably at most 0.6 mm, in the critical volume for the application, for example close to the surface, preferably at most 0.4 mm. The maximum diameter of individual inclusions in glass-ceramic components having a diameter of 500 mm to less than 2 m or edge lengths of 500 mm to less than 2 m is preferably at most 3 mm, in the volume critical for the application, for example close to the surface, preferably at most 1 mm. This may be advantageous in order to achieve the surface quality needed for the application.

The invention relates further to the use of a glass-ceramic of the invention in a precision component. The glass-ceramic may, for example, form a substrate for the precision component.

Further, the invention relates to the use of an LAS glass-ceramic of the invention in a precision component more particularly for use in metrology, spectroscopy, measurement technology, lithography, astronomy or Earth observation from space, for example as mirror or mirror carrier for segmented or monolithic astronomical telescopes or else as weight-reduced or ultra-light mirror substrates for, for example, space-based telescopes or as high-precision structure components for measurement of distance, for example in space, or optics for Earth observation, as precision components, such as standards for precision measurement technology, precision rules, reference plates in interferometers, as mechanical precision parts, for example for ring laser gyroscopes, spiral springs for the clock industry, as for example mirrors and prisms in LCD lithography, and for example as mask holders, wafer stages, reference plates, reference frames and grid plates in microlithography and in EUV (extreme UV) microlithography, and additionally as mirrors or mirror substrates and/or photomask substrates or photomask blanks or reticle mask blanks in EUV microlithography.

A glass-ceramic of the invention may be used to produce precision components in different sizes:
One embodiment relates to precision components having relatively small dimensions, more particularly in the case of (rect)angular shapes with edge lengths (width and/or depth) or in the case of round areas having diameters of at least 50 mm, preferably at least 100 mm and/or not more than 1500 mm, preferably not more than 1000 mm and/or a thickness of less than 50 mm, preferentially less than 10 mm and/or at least 1 mm, more preferably at least 2 mm. Such precision components may be employed, for example, in microlithography and EUV lithography.

Another embodiment concerns precision components having very small dimensions, more particularly having edge lengths (width and/or depth) or diameters and/or thickness of a few mm (for example at most 20 mm or at most 10 mm or at most 5 mm or at most 2 mm or at most 1 mm) to a few tenths of a mm (for example at most 0.7 mm or at most 0.5 mm). These precision elements may be, for example, a spacer, for example in an interferometer, or a component for ultra-stable clocks in quantum technology.

It is alternatively possible to produce very large precision components. One embodiment of the invention thus relates to components of high volume. In the context of this application, this term is taken to mean a component having a mass of at least 300 kg, preferentially at least 400 kg, preferentially at least 500 kg, preferentially at least 1 t, more preferably at least 2 t, according to one variant of the invention at least 5 t, and/or having edge lengths (width and/or depth) in the case of (rect)angular shapes of at least 0.5 m, more preferably at least 1 m, and/or with a thickness (height) of at least 50 mm, preferentially at least 100 mm, preferably at least 200 mm, further preferably at least 250 mm, or, in the case of round shapes, having a diameter of at least 0.5 m, more preferably at least 1 m, more preferably at least 1.5 m and/or having a thickness (height) of at least 50 mm, preferentially at least 100 mm, preferably at least 200 mm, further preferably at least 250 mm.

Specific embodiments of the invention may also be even larger components, having, for example, a diameter of at least 3 m or at least 4 m or greater and/or a thickness of 50 mm to 400 mm, preferably 50 mm to 300 mm. According to one variant, the invention also relates to rectangular components, where preferably at least one surface has an area of at least 1 $m^2$, preferentially at least 1.2 $m^2$, more preferably at least 1.4 $m^2$, for certain variants further preferably at least 3 $m^2$ or at least 4 $m^2$, and/or the thickness is 50 mm to 400 mm, preferably 50 mm to 300 mm. Generally speaking, large-volume components are produced that have a significantly greater base area than height. However, the large-volume components in question may also be those which have a shape approximated to a cube or a sphere.

Precision components may be, for example, optical components, specifically what is called a normal-incidence mirror, i.e. a mirror which is operated close to the perpendicular impingement of radiation, or what is called a grazing-incidence mirror, i.e. a mirror which is operated at the grazing impingement of radiation. Such a mirror comprises not only the substrate but also a coating that reflects the incident radiation. Especially in the case of a mirror for x-radiation, the reflective coating is, for example, a multilayer system or multilayer having a multiplicity of layers of high reflectivity in the x-ray range in the case of non-grazing incidence. A multilayer system of this kind for a normal-incidence mirror preferably comprises 40 to 200 pairs of layers, consisting of alternating layers of, for example, one of the material pairings Mo/Si, Mo/Bi, Ru/Si and/or MoRu/Be.

In particular, the optical elements of the invention may be x-ray-optical elements, i.e. optical elements that are used in conjunction with x-radiation, more particularly soft x-radiation or EUV radiation, and more particularly photomasks or reticle masks that are operated in reflection, especially for EUV microlithography. This may advantageously be mask blanks. With further advantage, the precision component can be used as a mirror for EUV lithography or as a substrate for a mirror for EUV lithography.

The precision component of the invention may further be a component, especially a mirror, for astronomical applications. Such components for use in astronomy may be employed here either terrestrially or in space. High-precision structure components for measurements of distance, in space for example, are a further advantageous field of application.

The precision component of the invention may be a lightweight structure. The component of the invention may further comprise a lightweight structure. This means that in certain regions of the component, cavities are provided for reducing the weight. As a result of lightweight working, the weight of a component is reduced preferentially by at least 80%, more preferably at least 90%, by comparison with the unworked component.

A further subject of the invention is a precision component which comprises an LAS glass-ceramic of the invention. Details in this regard have already been described above in connection with the glass-ceramic and the use thereof in precision components. This disclosure is incorporated fully into the description of the precision component.

It will be appreciated that the features of the invention that have been stated above and those still to be elucidated hereinafter can be used not only in the combination specified in each case but also in other combinations without leaving the scope of the invention.

**Examples**

Tables 1 and 2 show compositions of examples of glass-ceramics of the invention and compositions of comparative examples, and their properties.

The compositions stated in table 1 were melted from commercial raw materials, such as oxides, carbonates and nitrates in customary production processes. The green glasses produced according to table 1 were first ceramized at the maximum temperature specified in each case, over the specific time.

The production of a glass-ceramic for a precision component, more particularly a large precision component, is described for example in WO 2015/124710 A1.

Table 1 shows 4 examples (Ex.) of the invention which are hysteresis-free at least in a temperature range of 15°C to 35°C and have zero expansion. Examples 1 to 4 exhibit thermal hysteresis below around 15°C. Moreover, the index F is < 1.20, i.e. the profile of the expansion curve in the temperature range of 0°C to 50°C is advantageously flat for all the examples. Furthermore, the examples have a processing temperature ≤ 1330°C, allowing the glass-ceramics to be produced with high homogeneity in industrial-scale production plants. The processing temperatures as reported in tables 1 and 2 were ascertained in accordance with DIN ISO 7884-1 (2014 - source: Schott Techn. Glas-Katalog).

In the case of example 1, after ceramization at not more than 815°C over the time of 2.5 days, the average CTE was determined for further temperature intervals, with the following result: CTE (20; 300°C): 0.39 ppm/K, CTE (20; 500°C): 0.68 ppm/K, CTE (20; 700°C): 0.94 ppm/K.

Table 2 shows comparative examples (Comp. Ex.). Comparative examples 1 and 2 contain neither MgO nor ZnO, but the average CTE(0;50) is greater than $0 \pm 0.1 \times 10^{-6}$/K, i.e. these comparative examples do not have zero expansion. Furthermore, comparative examples 1 and 2 have a processing temperature > 1330°C. These materials are very viscous, and so it is not possible to use them to manufacture components of high homogeneity in industrial-scale production plants.

Comparative examples 3 and 7 to 16 all contain MgO and/or ZnO, and most of them have zero expansion. However, these comparative examples, at least in the temperature range of 15°C to 35°C, exhibit a thermal hysteresis of substantially more than 0.1 ppm. At room temperature, i.e. 22°C, this group of comparative examples has thermal hysteresis, except for comparative examples 14 and 16. Comparative example 9, although it has zero expansion, additionally has an unadvantageously steep profile of the expansion curve in the temperature range of 0°C to 50°C, as evident from the high value for the index F. Comparative example 3 features a comparatively low sum total of MgO + ZnO, but contains no $R_2O$. In the 15°C to 35°C temperature range at least it has a thermal hysteresis of substantially more than 0.1 ppm. Moreover, the expansion curve is sharply curved, as evident from the high value for the index F.

Empty fields in the tables below for the details concerning the composition mean that this/these component(s) was/were not added deliberately or is/are not present.

For two advantageous examples of the invention and one comparative example, table 3 shows the calculated alternative index $f_{(T.i.)}$ for different temperature intervals, from which it is apparent that the expansion curves of the examples in the temperature ranges defined each have a flatter profile than the comparative example.

It will be clear to experts that - depending on the application temperature of the glass-ceramic or of the precision component comprising the glass-ceramic - the glass-ceramic chosen is one having the desired properties, especially in terms of the thermal hysteresis and/or average CTE.

Table 1: Compositions, ceramization and properties (mol%)

| Example No. (Ex.) | 1 | 2 | 3 | 4 | | |
|---|---|---|---|---|---|---|
| Li$_2$O | 8.7 | 9.3 | 9.35 | 8.1 | | |
| Na$_2$O | 0.30 | 0.75 | 0.60 | 0.30 | | |

(continued)

| Example No. (Ex.) | 1 | 2 | 3 | 4 | | |
|---|---|---|---|---|---|---|
| $K_2O$ | 1.00 | 0.45 | 1.20 | 0.45 | | |
| MgO | | 0.75 | 0.55 | 0.30 | | |
| ZnO | 0.70 | | 0.30 | 0.50 | | |
| CaO | 1.60 | 1.25 | | 2.10 | | |
| BaO | 0.55 | | | 0.2 | | |
| SrO | | | | 0.2 | | |
| $Al_2O_3$ | 17.0 | 18.5 | 14.7 | 15.2 | | |
| $SiO_2$ | 67.15 | 62.5 | 67.1 | 68.15 | | |
| $P_2O_5$ | | 3.4 | 3.0 | 1.55 | | |
| $TiO_2$ | 1.85 | 1.9 | 2.0 | 1.85 | | |
| $ZrO_2$ | 0.95 | 1.0 | 1.0 | 0.9 | | |
| $Sb_2O_3$ | 0.2 | 0.2 | | | | |
| $As_2O_3$ | | | 0.2 | 0.2 | | |
| Total | 100.0 | 100.0 | 100.0 | 100.0 | | |
| $SiO_2$+ ($5 \times Li_2O$) | 110.65 | 109.00 | 113.85 | 108.70 | | |
| MgO+ZnO | 0.70 | 0.75 | 0.85 | 0.80 | | |
| $\Sigma R_2O$ (R=Na, K, Cs, Rb) | 1.30 | 1.20 | 1.80 | 0.75 | | |
| $\Sigma RO$ (R=Ca, Ba, Sr) | 2.15 | 1.25 | | 2.55 | | |
| Va (=T4) [°C] | 1269 | | 1307 | 1298 | | |
| T3 [°C] | 1436 | | 1488 | 1472 | | |
| Ceram. temperature [°C] | 815°C | 815°C | 810°C | 810°C | | |
| Ceram. time [days] | 2.5 | 2.5 | 2.5 | 2.5 | | |
| Cryst. phase [vol%] | 55 | 64 | 63 | 62 | | |
| Cryst. size [nm] | 51 | 55 | 47 | 44 | | |
| Av. CTE(0;+50°C) [ppm/K] | -0.07 | 0.02 | -0.06 | -0.015 | | |
| TCL (0; +50°C) | 3.49 | 0.96 | 2.89 | 0.79 | | |
| \|Expansion at 50°C\| | 3.49 | 0.96 | 2.89 | 0.73 | | |
| Index F | 1.00 | 1.00 | 1.00 | 1.08 | | |
| Hyst @ 45 °C [ppm] | <0.1 | <0.1 | <0.1 | <0.1 | | |
| Hyst @ 35 °C [ppm] | <0.1 | <0.1 | <0.1 | <0.1 | | |
| Hyst @ 30 °C [ppm] | <0.1 | <0.1 | <0.1 | <0.1 | | |
| Hyst @ 22 °C [ppm] | <0.1 | <0.1 | <0.1 | <0.1 | | |
| Hyst @ 19 °C [ppm] | <0.1 | <0.1 | <0.1 | <0.1 | | |
| Hyst @ 15 °C [ppm] | <0.1 | <0.1 | <0.1 | <0.1 | | |
| Hyst @ 10 °C [ppm] | 0.1 | 0.13 | 0.1 | 0.15 | | |
| Hyst @ +5 °C [ppm] | 0.13 | 0.20 | 0.11 | 0.25 | | |
| Hyst @ 0 °C [ppm] | 0.21 | 0.30 | 0.18 | 0.38 | | |

(continued)

| Example No. (Ex.) | 1 | 2 | 3 | 4 | | |
|---|---|---|---|---|---|---|
| Ceram. temperature [°C] | 815°C | 815°C | 810°C | 810°C | | |
| Ceram. time [days] | 2.5 | 2.5 | 2.5 | 2.5 | | |
| Av. CTE (-30;+70°C)[ppm/K] | -0.10 | 0.004 | -0.06 | -0.03 | | |
| Av. CTE (-40;+80°C)[ppm/K] | -0.10 | -0.005 | -0.10 | -0.05 | | |

Table 2: Compositions, ceramization and properties (mol%)

| Comparative example No. (Comp. Ex.) | 1 | 2 | 3 |
|---|---|---|---|
| $Li_2O$ | 8.1 | 9.15 | 8.15 |
| $Na_2O$ | 0.4 | 0.4 | |
| $K_2O$ | 0.15 | 0.2 | |
| MgO | | | 0.45 |
| ZnO | | | 0.30 |
| CaO | 4.15 | | 2.1 |
| BaO | | 0.6 | 0.95 |
| SrO | | | |
| $Al_2O_3$ | 12.45 | 14.2 | 15.35 |
| $SiO_2$ | 72.3 | 71.7 | 68.15 |
| $P_2O_5$ | | 0.62 | 1.5 |
| $TiO_2$ | 1.3 | 1.75 | 1.85 |
| $ZrO_2$ | 1.0 | 1.2 | 0.95 |
| $As_2O_3$ | 0.15 | 0.15 | 0.25 |
| Total | 100.0 | 100.0 | 100.0 |
| $SiO_2$+ (5x$Li_2O$) | | | 108.90 |
| MgO+ZnO | | | 0.75 |
| $ZR_2O$ (R=Na, K, Cs, Rb) | 0.55 | 0.6 | 0 |
| $\Sigma RO$ (R=Ca, Ba, Sr) | 4.15 | 0.6 | 3.05 |
| Va [°C] | 1345 | 1340 | 1295 |
| Ceram. temperature [°C] | 760 | | 790°C |
| Ceram. time [days] | 10 | | 2.5 |
| Cryst. phase [vol%] | 60 | | 63 |
| Cryst. size [nm] | 63 | | 39 |
| Av.CTE(0;+50°C) [ppm/K] | -0.25 | | -0.006 |
| TCL (0; +50°C) | | | 0.62 |
| \|Expansion at 50°C\| | | | 0.28 |
| Index F | | | 2.21 |
| Hyst @ 45 °C [ppm] | | | <0.1 |

(continued)

| Comparative example No. (Comp. Ex.) | 1 | 2 | 3 | | | |
|---|---|---|---|---|---|---|
| Hyst @ 35 °C [ppm] | | | <0.1 | | | |
| Hyst @ 30 °C [ppm] | | | 0.11 | | | |
| Hyst @ 22 °C [ppm] | < 0.1 | | 0.15 | | | |
| Hyst @ 19 °C [ppm] | < 0.1 | | | | | |
| Hyst @ 15 °C [ppm] | < 0.1 | | 0.23 | | | |
| Hyst @ 10 °C [ppm] | < 0.1 | | 0.33 | | | |
| Hyst @ +5 °C [ppm] | < 0.1 | | 0.48 | | | |
| Hyst @ 0 °C [ppm] | 0.13 | | | | | |
| Ceram. temperature [°C] | | | | | | |
| Ceram. time [days] | | | | | | |
| Av. CTE (-30;+70°C)[ppm/K] | | | | | | |
| Av. CTE (-40;+80°C)[ppm/K] | | | | | | |
| Table 2 (continued): Compositions, ceramization and properties (mol%) | | | | | | |
| Comparative example No. (Comp. Ex.) | 7 | 8 | 9 | 10 | 11 | 12 |
| $Li_2O$ | 8.5 | 7.78 | 9.32 | 9.2 | 9.4 | 9.0 |
| $Na_2O$ | 0.1 | 0.8 | | 0.1 | 0.2 | 0.1 |
| $K_2O$ | 0.5 | | | | | |
| MgO | 1.8 | | 1.2 | 1.6 | 1.2 | 1.6 |
| ZnO | 1.3 | 1.8 | 0.4 | 0.6 | 0.6 | 0.4 |
| CaO | | 2.42 | 1.0 | 1.2 | 1.0 | 1.3 |
| BaO | | 1.07 | 0.36 | 0.4 | 0.3 | 0.5 |
| SrO | | | | | | |
| $Al_2O_3$ | 16.9 | 15.39 | 19.11 | 16.2 | 19.0 | 16.4 |
| $SiO_2$ | 64.3 | 65.42 | 61.4 | 63.3 | 61.4 | 63.9 |
| $P_2O_5$ | 3.4 | 2.47 | 3.97 | 3.8 | 3.9 | 3.5 |
| $TiO_2$ | 1.9 | 1.67 | 1.92 | 2.2 | 1.9 | 2.1 |
| $ZrO_2$ | 1.1 | 0.92 | 1.07 | 1.1 | 1.1 | 1.2 |
| $As_2O_3$ | 0.2 | 0.26 | 0.25 | 0.2 | 0.2 | 0.1 |
| Total | 100.0 | 100.0 | 100.0 | 100.0 | 100.0 | 100.1 |
| $SiO_2$+ (5x$Li_2O$) | | | | | | |
| MgO+ZnO | 3.1 | 1.8 | 1.6 | 2.2 | 1.8 | 2.0 |
| $\Sigma R_2O$ (R=Na, K, Cs, Rb) | 0.6 | 0.8 | | 0.1 | 0.2 | 0.1 |
| $\Sigma RO$ (R=Ca, Ba, Sr) | | 3.49 | 1.36 | 1.6 | 1.3 | 1.8 |
| Va [°C] | | | | | | |
| Ceram. temperature [°C] | 810 | | | 760 | 810 | 760 |
| Ceram. time [days] | 10 | | | 10 | 5 | 10 |

(continued)

| Table 2 (continued): Compositions, ceramization and properties (mol%) | | | | | | |
|---|---|---|---|---|---|---|
| Comparative example No. (Comp. Ex.) | 7 | 8 | 9 | 10 | 11 | 12 |
| Cryst. phase [vol%] | 76 | | | | | |
| Cryst. size [nm] | 72 | | | | | |
| Av. CTE(0;+50°C) [ppm/K] | 0.03 | 0.02 | 0.002 | -0.15 | 0.03 | -0.05 |
| TCL (0; +50°C) | | | 1.19 | 3,68 | 1.32 | 0.35 |
| \|Expansion at 50°C\| | | | 0.11 | 3,68 | 1.28 | 0.35 |
| Index F | | | 10.82 | 1.00 | 1.03 | 1.00 |
| Hyst @ 45 °C [ppm] | 0.11 | <0.1 | <0.1 | <0.1 | <0.1 | <0.1 |
| Hyst @ 35 °C [ppm] | 0.14 | <0.1 | 0.12 | <0.1 | <0.1 | <0.1 |
| Hyst @ 30 °C [ppm] | 0.18 | <0.1 | 0.16 | <0.1 | 0.1 | 0.11 |
| Hyst @ 22 °C [ppm] | 0.27 | 0.14 | 0.24 | 0.14 | 0.16 | 0.17 |
| Hyst @ 19 °C [ppm] | | | | | | |
| Hyst @ 15 °C [ppm] | | | | | | |
| Hyst @ 10 °C [ppm] | 0.61 | 0.42 | 0.54 | 0.38 | 0.85 | 0.43 |
| Hyst @ +5 °C [ppm] | 0.85 | 0.61 | 0.74 | 0.56 | 0.61 | 0.61 |
| Hyst @ 0 °C [ppm] | 1.1 | 0.81 | 0.92 | 0.76 | 0.85 | 0.82 |
| Ceram. temperature [°C] | | | | | | |
| Ceram. time [days] | | | | | | |
| Av. CTE (-30;+70°C)[ppm/K] | | | | | | |
| Av. CTE (-40;+80°C)[ppm/K] | | | | | | |
| Comparative example No. (Comp. Ex.) | 13 | 14 | 15 | 16 | | |
| $Li_2O$ | 8.4 | 8.2 | 9.4 | 9.3 | | |
| $Na_2O$ | 0.05 | 0.35 | 0.1 | 0.25 | | |
| $K_2O$ | | | 0.6 | 0.25 | | |
| MgO | | | 1.8 | | | |
| ZnO | 0.95 | 1.2 | | 0.60 | | |
| CaO | 2.3 | 2.35 | | 1.0 | | |
| BaO | | | | 0.85 | | |
| SrO | | | | | | |
| $Al_2O_3$ | 16.55 | 16.5 | 17 | 18.95 | | |
| $SiO_2$ | 65.15 | 64.8 | 64.4 | 61.5 | | |
| $P_2O_5$ | 3.4 | 3.3 | 3.5 | 4.05 | | |
| $TiO_2$ | 2.0 | 2.0 | 1.95 | 2.05 | | |
| $ZrO_2$ | 1.1 | 1.1 | 1.05 | 1.05 | | |
| $As_2O_3$ | 0.15 | 0.2 | 0.2 | 0.15 | | |
| Total | 100.0 | 100.0 | 100.0 | 100.0 | | |
| $SiO_2+ (5xLi_2O)$ | | | | | | |

(continued)

| Comparative example No. (Comp. Ex.) | 13 | 14 | 15 | 16 |
|---|---|---|---|---|
| MgO+ZnO | 0.95 | 1.2 | 1.8 | 0.60 |
| $\Sigma R_2O$ (R=Na, K, Cs, Rb) | 0.05 | 0.35 | 0.7 | 0.50 |
| $\Sigma RO$ (R=Ca, Ba, Sr) | 2.25 | 2.35 | | 1.85 |
| Va [°C] | | | | |
| Ceram. temperature [°C] | 770 | 810 | 790 | 830 |
| Ceram. time [days] | 5 | 1 | 5 | 2.5 |
| Cryst. phase [vol%] | 73 | 69 | 74 | 66 |
| Cryst. size [nm] | 43 | 47 | 56 | 41 |
| Av. CTE(0;+50°C) [ppm/K] | -0.03 | -0.08 | -0.06 | 0.07 |
| TCL (0; +50°C) | | | | 4.29 |
| \|Expansion at 50°C\| | | | | 3.55 |
| Index F | | | | 1.21 |
| Hyst @ 45 °C [ppm] | <0.1 | <0.1 | <0.1 | <0.1 |
| Hyst @ 35 °C [ppm] | <0.1 | <0.1 | <0.1 | <0.1 |
| Hyst @ 30 °C [ppm] | <0.1 | <0.1 | <0.1 | <0.1 |
| Hyst @ 22 °C [ppm] | 0.13 | <0.1 | 0.16 | <0.1 |
| Hyst @ 19 °C [ppm] | 0.19 | < 0.1 | | < 0.1 |
| Hyst @ 15 °C [ppm] | 0.28 | 0.16 | | 0.11 |
| Hyst @ 10 °C [ppm] | 0.44 | 0.3 | 0.44 | 0.15 |
| Hyst @ +5 °C [ppm] | 0.67 | 0.55 | 0.63 | 0.23 |
| Hyst @ 0 °C [ppm] | 0.97 | 0.84 | 0.85 | 0.35 |
| Ceram. temperature [°C] | | | | |
| Ceram. time [days] | | | | |
| Av. CTE (-30;+70°C)[ppm/K] | | | | |
| Av. CTE (-40;+80°C)[ppm/K] | | | | |

Table 3: Alternative index $f_{T.i.}$ for selected Ex. and Comp. Ex.

| $f_{T.i.}$ [ppm/K] | Ti-dop. $SiO_2$ | Ex. 2 | Ex. 4 |
|---|---|---|---|
| **20-40°C** | 0.024 | 0.020 | 0.019 |
| **20-70°C** | 0.039 | 0.022 | |
| **-10-30°C** | 0.015 | | 0.005 |

## Claims

1. LAS glass-ceramic having an average coefficient of thermal expansion CTE in the range from 0 to 50°C of at most $0 \pm 0.1 \times 10^{-6}$/K and a thermal hysteresis at least in the temperature range from 15°C to 35°C of < 0.1 ppm and comprising components as follows (in mol% based on oxide):

$$SiO_2 \qquad 60 - < 70$$

(continued)

| | |
|---|---|
| $Li_2O$ | 7 - 9.6 |
| MgO+ZnO | > 0.5 - 1.5 |
| $R_2O$ | > 0.5 |

where $R_2O$ may be $Na_2O$ and/or $K_2O$ and/or $Cs_2O$ and/or $Rb_2O$,
nucleating agent with a content of 1.5 to 6 mol%, where nucleating agent is at least one component selected from the group consisting of $TiO_2$, $ZrO_2$, $Ta_2O_5$, $Nb_2O_5$, $SnO_2$, MoOs, $WO_3$ and $HfO_2$.

2. LAS glass-ceramic according to Claim 1, comprising $Al_2O_3$ with a content of 10 to 22 mol%, preferably of 11 to 21 mol%, and/or $P_2O_5$ with a content of 0 to 6 mol%, preferably of 0.1 to 5 mol%.

3. LAS glass-ceramic according to Claim 1 or 2, wherein the content of the sum total of ZnO + MgO is $\geq$ 0.55 mol%, advantageously $\geq$ 0.6 mol%, advantageously $\geq$ 0.65 mol%, $\geq$ 0.7 mol% and/or advantageously < 1.5 mol%, preferentially $\leq$ 1.45 mol%, preferably $\leq$ 1.4 mol%, preferably $\leq$ 1.35 mol%, preferably $\leq$ 1.3 mol%, preferably $\leq$ 1.25 mol%, preferably $\leq$ 1.2 mol% and/or the content of MgO is $\leq$ 1.1 mol%, preferably $\leq$ 1.05 mol%, preferably $\leq$ 1.0 mol%, preferably $\leq$ 0.95 mol%, more preferably $\leq$ 0.9 mol% and/or the content of ZnO is $\leq$ 1.5 mol%, preferably $\leq$ 1.45 mol%, preferably $\leq$ 1.4 mol%, preferably $\leq$ 1.35 mol%, preferably $\leq$ 1.3 mol%, more preferably $\leq$ 1.25 mol%.

4. LAS glass-ceramic according to any of the preceding claims, wherein the content of $SiO_2$ is $\leq$ 69.5 mol%, preferably $\leq$ 69 mol%, particularly preferably $\leq$ 68.5 mol%.

5. LAS glass-ceramic according to any of the preceding claims, wherein the content of the sum total of RO (CaO + BaO + SrO) is $\geq$ 0.1 mol%, preferably $\geq$ 0.2 mol%, advantageously $\geq$ 0.3 mol%, preferably $\geq$ 0.4 mol% and/or is $\leq$ 6 mol%, preferentially $\leq$ 5 mol%, advantageously $\leq$ 4.5 mol%, advantageously $\leq$ 4.0 mol%, preferably $\leq$ 3.8 mol%, preferably $\leq$ 3.5 mol%, preferably $\leq$ 3.2 mol%.

6. LAS glass-ceramic according to any of the preceding claims, wherein the content of the sum total of $R_2O$ ($Na_2O$ + $K_2O$ + Cs2O + $Rb_2O$) is $\geq$ 0.55 mol%, preferably $\geq$ 0.6 mol%, advantageously $\geq$ 0.65 mol%, advantageously $\geq$ 0.7 mol%, preferably $\geq$ 0.75 mol% and/or is $\leq$ 6 mol%, advantageously $\leq$ 5 mol%, preferably $\leq$ 4 mol%, preferably $\leq$ 3 mol%, preferably $\leq$ 2.5 mol%, preferably $\leq$ 2 mol%.

7. LAS glass-ceramic according to any of the preceding claims, wherein the content of the sum total of the nucleating agents is $\geq$ 1.5 mol%, preferentially $\geq$ 2.5 mol%, advantageously $\geq$ 3 mol% and/or is $\leq$ 6 mol%, advantageously $\leq$ 5 mol%, preferably $\leq$ 4.5 mol%, preferably $\leq$ 4 mol%.

8. LAS glass-ceramic according to any of the preceding claims, wherein the condition is applicable: molar content of $SiO_2$ + (5 $\times$ molar content of $Li_2O$) $\geq$ 105, advantageously $\geq$ 105.5, advantageously $\geq$ 106, preferably molar content of $SiO_2$ + (5 $\times$ molar content of $Li_2O$) $\geq$ 107.5, and/or wherein the condition is applicable: molar content of $SiO_2$ + (5 $\times$ molar content of $Li_2O$) $\leq$ 115.5, preferably molar content of $SiO_2$ + (5 $\times$ molar content of $Li_2O$) $\leq$ 114.5.

9. LAS glass-ceramic according to any of the preceding claims, wherein the processing temperature Va is not more than 1330°C, preferably not more than 1320°C.

10. LAS glass-ceramic according to any of the preceding claims, wherein a main crystal phase is high quartz solid solution and advantageously the average crystallite size of the high quartz solid solution here is < 100 nm, advantageously < 80 nm, preferably < 70 nm and/or a crystal phase fraction is less than 75 vol%.

11. LAS glass-ceramic according to any of the preceding claims, wherein an index F is < 1.20, preferably < 1.15, preferably < 1.10, preferably at most 1.05, where F = TCL (0; 50°C) / |expansion (0; 50°C)|.

12. LAS glass-ceramic according to any of the preceding claims, wherein an alternative index $f_{(20;40)}$ is < 0.024 ppm/K and/or an alternative index $f_{(20;70)}$ is < 0.039 ppm/K and/or an alternative index $f_{(-10;30)}$ is < 0.015 ppm/K.

13. LAS glass-ceramic according to any of the preceding claims, having a relative change in length (dl/l$_0$) of $\leq$ |0.10| ppm, preferably of $\leq$ 10.091 ppm, particularly preferably of $\leq$ 10.081 ppm and especially preferably of $\leq$ |0.07| ppm

in the temperature range from 20°C to 30°C and/or a relative change in length ($dl/l_0$) of $\leq$ |0.17| ppm, preferably of $\leq$ |0.15| ppm, particularly preferably of $\leq$ |0.13| ppm and especially preferably of $\leq$ |0.11| ppm in the temperature range from 20°C to 35°C.

14. LAS glass-ceramic according to any of the preceding claims, having a relative change in length ($dl/l_0$) of $\leq$ 10.301 ppm, preferably of $\leq$ |0.25| ppm, particularly preferably of $\leq$ |0.20| ppm and especially preferably of $\leq$ |0.15| ppm in the temperature range from 20°C to 40°C.

15. LAS glass-ceramic according to any of the preceding claims, wherein the CTE-T curve in a temperature interval having a breadth of at least 30 K has a slope of $\leq 0 \pm 2.5$ ppb/$K^2$, preferably $\leq 0 \pm 2$ ppb/$K^2$, preferably $\leq 0 \pm 1.5$ ppb/$K^2$, particularly preferably $\leq 0 \pm 1$ ppb/$K^2$.

16. LAS glass-ceramic according to any of the preceding claims, having a thermal hysteresis of < 0.1 ppm at least in the temperature range from 15°C to 40°C, advantageously at least in the temperature range from 15°C to 45°C, preferably at least in the temperature range from 15°C to 50°C.

17. Use of an LAS glass-ceramic according to any of the preceding claims in a precision component more particularly for use in metrology, spectroscopy, measurement technology, lithography, astronomy or Earth observation from space, for example as mirror or mirror carrier for segmented or monolithic astronomical telescopes or else as weight-reduced or ultra-light mirror substrates for, for example, space-based telescopes or as high-precision structure components for measurement of distance, for example in space, or optics for Earth observation, as precision components, such as standards for precision measurement technology, precision rules, reference plates in interferometers, as mechanical precision parts, for example for ring laser gyroscopes, spiral springs for the clock industry, as for example mirrors and prisms in LCD lithography, and for example as mask holders, wafer stages, reference plates, reference frames and grid plates in microlithography and in EUV microlithography, and as mirrors and/or photomask substrates, photomask carriers or reticle mask blanks in EUV microlithography.

**Fig. 1**

**Hysteresis of thermal expansion between 50°C and -10°C for samples 1, 2 and 3 (cooling to -10°C; hold time: 300 min at -10°C; heating to 50°C)**

Legend:
- Sample 1: 36 K/h
- Sample 1: model 36 K/h
- Sample 1: 6 K/h
- Sample 1: model 6 K/h
- Sample 2: 36 K/h
- Sample 2: model 36 K/h
- Sample 2: 6 K/h
- Sample 2: model 6 K/h
- Sample 3: 36 K/h
- Sample 3: model 36 K/h
- Sample 3: 6 K/h
- Sample 3: model 6 K/h

Start of measurements

Fig. 2

Fig. 3

Fig. 4

Fig. 5

Fig. 6

Fig. 7

Fig. 8

Fig. 9

**Fig. 10**

**Fig. 11**

Fig. 12

**Fig. 13**

**Fig. 14**

**Fig. 15**

**Fig. 16**

**Fig. 17**

**Fig. 18**

**Fig. 19**

Fig. 20

**Fig. 21**

**Fig. 22**

Europäisches
Patentamt

European
Patent Office

Office européen
des brevets

## EUROPEAN SEARCH REPORT

**Application Number**

EP 23 19 5501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/053695 A1 (AVANSTRATE INC [JP]; SEHGAL DR JEETENDRA) 25 March 2021 (2021-03-25) * example 3; table 1 * | 1-17 | INV. C03C3/087 C03C3/097 C03C4/00 C03C10/00 |
| Y | US 2014/023865 A1 (COMTE MARIE JACQUELINE MONIQUE [FR] ET AL) 23 January 2014 (2014-01-23) * paragraphs [0008] – [0011]; examples 6, 7; table 1 * | 1-17 | C03C14/00 |
| Y | US 2018/339933 A1 (MITRA INA [DE] ET AL) 29 November 2018 (2018-11-29) * paragraph [0071]; examples 1-18; tables 1,2 * | 1-17 | |
| A,P | WO 2022/194846 A1 (SCHOTT AG [DE]) 22 September 2022 (2022-09-22) * tables 1-2 * | 1-17 | |
| A,P | EP 4 059 903 A1 (SCHOTT AG [DE]) 21 September 2022 (2022-09-21) * tables 1-2 * | 1-17 | **TECHNICAL FIELDS SEARCHED (IPC)** C03C |

The present search report has been drawn up for all claims

| Place of search | Date of completion of the search | Examiner |
|---|---|---|
| Munich | 7 December 2023 | Lecerf, Nicolas |

EPO FORM 1503 03.82 (P04C01)

## ANNEX TO THE EUROPEAN SEARCH REPORT
## ON EUROPEAN PATENT APPLICATION NO.

EP 23 19 5501

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2023

| Patent document cited in search report | Publication date | Patent family member(s) | Publication date |
|---|---|---|---|
| WO 2021053695 A1 | 25-03-2021 | CN 115244018 A | 25-10-2022 |
| | | WO 2021053695 A1 | 25-03-2021 |
| US 2014023865 A1 | 23-01-2014 | CN 104703937 A | 10-06-2015 |
| | | CN 108191229 A | 22-06-2018 |
| | | CN 112851115 A | 28-05-2021 |
| | | DE 202013012811 U1 | 20-01-2020 |
| | | EP 2874959 A1 | 27-05-2015 |
| | | EP 3632861 A1 | 08-04-2020 |
| | | JP 6130503 B2 | 17-05-2017 |
| | | JP 6491688 B2 | 27-03-2019 |
| | | JP 2015527970 A | 24-09-2015 |
| | | JP 2017149644 A | 31-08-2017 |
| | | KR 20150038177 A | 08-04-2015 |
| | | KR 20190133802 A | 03-12-2019 |
| | | TW 201412676 A | 01-04-2014 |
| | | US 2014023865 A1 | 23-01-2014 |
| | | US 2015344351 A1 | 03-12-2015 |
| | | US 2018022638 A1 | 25-01-2018 |
| | | US 2019092679 A1 | 28-03-2019 |
| | | US 2022002187 A1 | 06-01-2022 |
| | | WO 2014014798 A1 | 23-01-2014 |
| US 2018339933 A1 | 29-11-2018 | CN 108929040 A | 04-12-2018 |
| | | DE 102018111144 A1 | 29-11-2018 |
| | | JP 6695383 B2 | 20-05-2020 |
| | | JP 2018199612 A | 20-12-2018 |
| | | NL 2020959 A | 04-12-2018 |
| | | US 2018339933 A1 | 29-11-2018 |
| WO 2022194846 A1 | 22-09-2022 | KR 20230158021 A | 17-11-2023 |
| | | KR 20230158022 A | 17-11-2023 |
| | | TW 202300471 A | 01-01-2023 |
| | | TW 202306923 A | 16-02-2023 |
| | | WO 2022194840 A1 | 22-09-2022 |
| | | WO 2022194846 A1 | 22-09-2022 |
| EP 4059903 A1 | 21-09-2022 | CN 115073008 A | 20-09-2022 |
| | | CN 115073009 A | 20-09-2022 |
| | | DE 102022105929 A1 | 22-09-2022 |
| | | DE 102022105930 A1 | 22-09-2022 |
| | | EP 4059902 A1 | 21-09-2022 |
| | | EP 4059903 A1 | 21-09-2022 |
| | | JP 2022142777 A | 30-09-2022 |
| | | JP 2022142778 A | 30-09-2022 |
| | | KR 20220129481 A | 23-09-2022 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 19 5501

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2023

| Patent document cited in search report | Publication date | Patent family member(s) | | Publication date |
|---|---|---|---|---|
| | | KR 20220129482 A | | 23-09-2022 |
| | | TW 202248162 A | | 16-12-2022 |
| | | TW 202300468 A | | 01-01-2023 |
| | | US 2022298062 A1 | | 22-09-2022 |
| | | US 2022298079 A1 | | 22-09-2022 |

**EP 4 339 169 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4851372 A
- US 5591682 A
- EP 587979 A
- US 7226881 B
- US 7645714 B
- DE 102004008824 A

- DE 102018111144 A
- DE 102022105929
- WO 2015124710 A
- DE 102015113548 A
- WO 2015124710 A1

**Non-patent literature cited in the description**

- **O. LINDIG ; W. PANNHORST.** Thermal expansion and length stability of ZERODUR® in dependence on temperature and time. *APPLIED OPTICS,* October 1985, vol. 24 (20
- **R. HAUG et al.** Length variation in ZERODUR® M in the temperature range from -60°C to +100°C. *APPLIED OPTICS,* October 1989, vol. 28 (19

- **R. JEDAMZIK et al.** Modeling of the thermal expansion behavior of ZERODUR® at arbitrary temperature profiles. *Proc. SPIE,* 2010, vol. 7739
- **D.B. HALL.** Dimensional stability tests over time and temperature for several low-expansion glass ceramics. *APPLIED OPTICS,* April 1996, vol. 35 (10